# EUROPEAN PATENT APPLICATION

(11) **EP 4 598 157 A1**
(43) Date of publication of application: **06.08.2025**
(21) Application number: 22960176.0
(22) Date of filing: 29.09.2022
(51) Int. Cl.: H04W 56/00

(54) **INFORMATION INDICATION METHOD, REPEATER, AND NETWORK DEVICE**

(71) Applicant: FUJITSU LIMITED, Kawasaki-shi, Kanagawa 211-8588 (JP)
(72) Inventor: JIANG, Qinyan, Beijing 100022 (CN); ZHANG, Lei, Beijing 100022 (CN); TIAN, Yan, Beijing 100022 (CN)
(74) Representative: Haseltine Lake Kempner LLP
(86) International application number: PCT/CN2022/122934
(87) International publication number: WO 2024/065541

(57) **Abstract**

Embodiments of this disclosure provide an information indication method, a repeater and a network device. The method includes: receiving indication information for controlling a forwarding unit of the repeater by a mobile termination of the repeater, the indication information including first information for indicating time-domain resources, the time-domain resources being related to subcarrier spacings.

## Description

### Technical Field

This disclosure relates to the field of communication technologies.

### Background

Compared with conventional 3G (third generation mobile communication technology) and 4G (fourth generation mobile communication technology) systems, a 5G (fifth generation mobile communication technology) system is able to provide larger bandwidths and higher data rates, and is able to support more types of terminals and vertical services.

For this reason, 5G systems are also deployed at new frequency bands, which are obviously higher than those of 3G and 4G systems. For example, a 5G system may be deployed in a millimeter waveband (such as 28 GHz, 38GHz, 60 GHz, and higher wavebands).

According to the principle of propagation of wireless signals, the higher a carrier frequency, the more severe a fading experienced by signals during transmission. Therefore, in actual deployment, a 5G system needs a cell coverage enhancement method more than 3G and 4G systems need, especially a 5G system deployed in a millimeter waveband. Hence, how to better enhance cell coverage of a 5G system has become an urgent problem to be solved.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In order to better solve the coverage problem of cellular mobile communication systems in practical deployment, use of a radio frequency (RF) relay/repeater to amplify and forward signals between a terminal equipment and a network device is commonly used means of deployment. RF repeaters are widely used in actual deployment of 3G and 4G systems. Generally speaking, an RF repeater is a device that amplifies and forwards signals between devices in the RF domain. That is, an RF repeater is a non-regenerative relay node, which only directly amplifies and forwards all received signals.

It was found by the inventors that for a coverage problem encountered in deploying a 5G system, performing coverage enhancement by using an RF repeater is one of feasible solutions. However, as a forwarding behavior of an RF repeater is not controlled by a network, on the one hand, an effect of amplifying and forwarding a target signal by the repeater may be not ideal, and on the other hand, it may pose significant interference to other devices in the network, increase noise and interference levels of the system, thereby reducing network throughput. Specifically, taking an antenna direction as an example, compared to 3G and 4G systems, a 5G system adopts the more advanced and complex MIMO (multiple-input multiple-output) technology. In the 5G system, especially for higher carrier frequencies, directional antennas have become basic components of a network device and a terminal equipment. Transmitting and receiving signals based on a beamforming technology is a fundamental signal transmission mode in the 5G system. (Simulated) beam directions and widths, etc., of the network device and terminal equipment may dynamically change (i.e. beam switching) due to such factors as changes of positions. However, antennas of an RF repeater may not be dynamically adjusted with respect to directions and have relatively wide beams, and beam directions and beam widths of transmitting and receiving antennas of the RF repeater are unable to flexibly match dynamic changes of positions, the beam directions and widths of the transmitting and receiving antennas of the network device and terminal equipment. If such an RF repeater is configured in the 5G system, on the one hand, its performance/effect of amplifying/enhancing target signals is/are not significant due to that the beam directions and beam widths of its transmitting and receiving antennas do not match the beam directions and beam widths of the network device and terminal equipment, and on the other hand, it may also cause significant interference to other devices (e.g. a network device or a terminal equipment) within a larger range due to use of wider transmit beams, increase noise and interference levels of the entire system, thereby reducing network throughput.

In order to solve at least one of the above problems, embodiments of this disclosure provide an information indication method, a repeater and a network device.

According to one aspect of the embodiments of this disclosure, there is provided an information indication method, applicable to a repeater, the method including:
receiving indication information for controlling a forwarding unit of the repeater by a mobile termination of the repeater, the indication information including first information for indicating time-domain resources, the time-domain resources being related to subcarrier spacings.

According to another aspect of the embodiments of this disclosure, there is provided a repeater, including:
a receiving unit configured to receive indication information for controlling a forwarding unit of the repeater, the indication information including first information for indicating time-domain resources, the time-domain resources being related to subcarrier spacings.

According to a further aspect of the embodiments of this disclosure, there is provided an information indication method, applicable to a network device, the method including:
transmitting indication information for controlling a forwarding unit of a repeater by the network device to a mobile termination of the repeater, the indication information including first information for indicating time-domain resources, the time-domain resources being related to subcarrier spacings.

According to still another aspect of the embodiments of this disclosure, there is provided a network device, including:
a transmitting unit configured to transmit indication information for controlling a forwarding unit of a repeater to a mobile termination of the repeater, the indication information including first information for indicating time-domain resources, the time-domain resources being related to subcarrier spacings.

According to yet another aspect of the embodiments of this disclosure, there is provided a communication system, including the repeater as described in the another aspect and/or the network device as described in the still another aspect.

An advantage of the embodiments of this disclosure exists in that the repeater may be controlled by the network device, so that (time-domain resources corresponding to) the beams when the repeater performs forwarding are able to match (time-domain resources corresponding to) the beams receiving the forwarded signals, or that the time-domain resources to which the on state of the forwarding unit match the time-domain resources of the data transmission between the network device and the terminal equipment, thereby increasing an effect of amplifying/enhancing signals, saving power consumption of the repeater, and at the same time, reducing interference to other devices in the network, and improving network throughput.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of an application scenario of embodiments of this disclosure;
FIG. 2 is a schematic diagram of NCR of embodiments of this disclosure;
FIG. 3 is a schematic diagram of the information indication method of embodiments of this disclosure;
FIG. 4 is a schematic diagram of an AC link beam of the NCR of the embodiments of this disclosure;
FIGs. 5A-5G are schematic diagrams of the first indication information of the embodiments of this disclosure;
FIG. 6 is a schematic diagram of the first indication information of the embodiments of this disclosure;
FIGs. 7A-7G are schematic diagrams of the first indication information of the embodiments of this disclosure;
FIGs. 8A-8G are schematic diagrams of first indication information of the embodiments of this disclosure;
FIG. 9 is a schematic diagram of second indication information of the embodiments of this disclosure;
FIGs. 10A-10G are schematic diagrams of the second indication information of the embodiments of this disclosure;
FIG. 11 is a schematic diagram of the repeater of embodiments of this disclosure;
FIG. 12 is a schematic diagram of the information indication method of embodiments of this disclosure;
FIG. 13 is a schematic diagram of the network device of embodiments of this disclosure; and
FIG. 14 is a schematic diagram of the electronic device of embodiments of this disclosure.

### Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), an IAB-MT, or a station, etc.

The terminal equipment may include but not limited to the following devices: a cellular phone, a personal digital assistant (PDA), a wireless modem, a wireless communication device, a hand-held device, an machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In order to enhance coverage, an RF repeater is introduced into research of 3GPP Rel-17 to forward transmission between a terminal equipment (UE) and a network device (base station). For the network device and the terminal equipment, the RF repeater introduced into 3GPP Rel-17 is transparent, that is, both the network device and the terminal equipment are unaware of existence of the RF repeater.

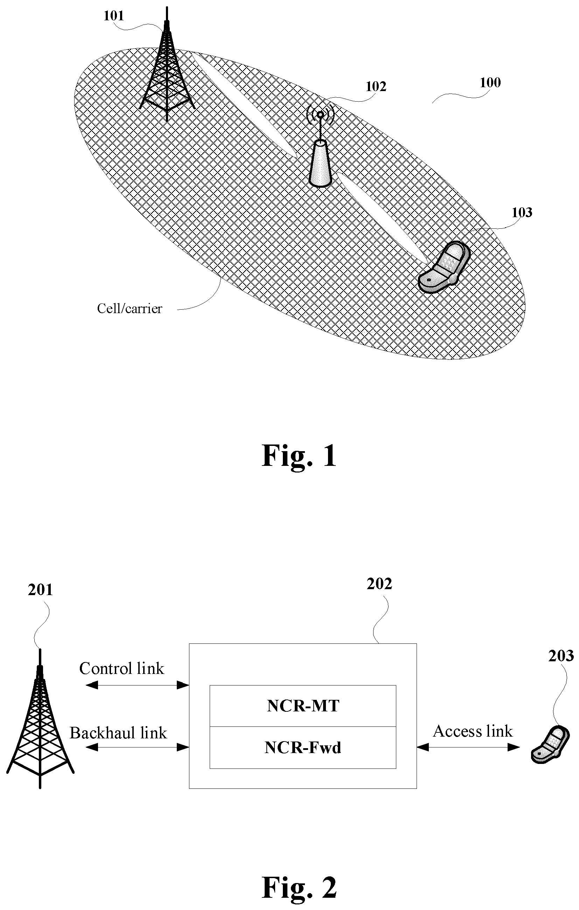

FIG. 1 is schematic diagram of an application scenario of embodiments of this disclosure. As shown in FIG. 1, for the sake of description, the description shall be given by taking a network device (such as a 5G gNB) 101, a repeater 102 and a terminal equipment (UE) 103 as examples; however, this disclosure is not limited thereto.

As shown in FIG. 1, the terminal equipment 103 may establish connection with the network device 101 and communicate therewith. In order improve communication quality, channels/signals transmitted between the terminal equipment 103 and the network device 101 are forwarded by the repeater 102. Exchange of channels/signals between the network device 101, the terminal equipment 103 and the repeater 102 is performed in a method of reception and transmission based on beams.

As shown in FIG. 1, the network device 101 may have a cell/a carrier, and the network device 101, the repeater 102 and the terminal equipment 103 may perform forwarding/communication at the cell; however, the embodiments of this disclosure are not limited thereto, for example, the network device 101 may have other cells/carriers.

In the embodiments of this disclosure, existing traffics or traffics that may be implemented in the future may be performed between the network device and the terminal equipment. For example, such traffics may include but not limited to enhanced mobile broadband (eMBB), massive machine type communication (mMTC), ultra-reliable and low-latency communication (URLLC), and Vehicle to Everything (V2X), etc.

A repeater does not have an ability to communicate with a network device. Hence, although a repeater is helpful to enhance signal strengths, it is not flexible enough to cope with complex environmental changes. Deploying a repeater in a 5G network (especially a high-frequency 5G network) may cause unnecessary interference to other network devices and/or terminal equipments, thereby reducing a transmission efficiency (such as throughput) of the entire network. In order that forwarding of the repeater is more flexible to be adapted to characteristics of the 5G network, the network device needs to assist the repeater, and configure forwarding of the repeater according to network conditions.

A network controlled repeater (NCR) scheme is proposed in 3GPP Rel-18 to enhance NR coverage, so as to forward signals between a network device and a terminal equipment. NCR may directly communicate with the network device via control links to assist in forwarding operations of the NCR.

FIG. 2 is a schematic diagram of the NCR in embodiments of this disclosure. As shown in FIG. 2, NCR 202 is configured between the network device 201 and the terminal equipment 203. NCR 202 may include the following two units/components: a mobile termination of the repeater (NCR-MT) and a forwarding unit of the repeater. (NCR-Fwd) The NCR-Fwd may also be referred to as a routing unit of the NCR (NCR-RU). The NCR-MT is used for communication with the network device, the NCR-Fwd is used for forwarding signals between the network device and the terminal equipment, and the NCR-MT and NCR-Fwd are functional entities, with functions thereof being implemented by identical or different hardware modules.

As shown in FIG. 2, the NCR of the embodiments of this disclosure may have three links: a control link (C-link), a backhaul link (BH link) for forwarding, and an access link (AC link), wherein the C-link is used for communication between the NCR and the network device, the BH link is used by the repeater to receive signals to be forwarded from the network device, or forward signals from the terminal equipment to the network device, and the AC link is used by the repeater to forward signals from the network device to the terminal equipment, or receive signals to be forwarded from the terminal equipment.

It was realized by the inventors that a 5G system is more complex compared to previous 3G, 4G systems, etc., for example, it is able to support more types of services and terminal types, and it also needs to be deployed in multiple frequency bands and scenarios. Compared to RF repeaters, an NCR is needed to have beam-based functions.

In addition, on/off of a legacy repeater is usually set manually, and it is unable to dynamically match data transmission between a network device and a UE. Generally, data transmission between the network device and UE is not constantly performed. If the repeater is also in an on state when no data transmission between the network device and UE is performed, on the one hand, unnecessary power consumption will be increased, and on the other hand, interference to other devices may be caused, thereby reducing network throughput. Hence, compared to a legacy RF repeater, the NCR needs to have a function of controlling on/off of a forwarding unit.

However, it was found by the inventors that how a repeater indicates/determines a time period (a time-domain resource) to which an AC link beam corresponds and/or a time period (a time-domain resource) to which on/off of a forwarding unit corresponds, especially how a repeater indicates/determines a subcarrier spacing used to determine a time-domain resource to which an AC link beam corresponds and/or a subcarrier spacing used to determine a time-domain resource to which on/off of a forwarding unit corresponds, has become an urgent problem to be solved.

Various implementations of the embodiments of this disclosure shall be described below with reference to the accompanying drawings. These implementations are exemplary only, and are not intended to limit this disclosure.

In the embodiments of this disclosure, the repeater may communicate with the network device, receive communication channels/signals transmitted by the network device, and demodulate/decode the channels/signals to obtain information transmitted by the network device to the repeater. A signal processing process is hereinafter referred to as "communication". The repeater may also forward channels/signals transmitted between the network device and the terminal equipment, does not demodulate/decode the channels/signals, and may perform amplification, etc. A signal processing process is hereinafter referred to as "forwarding", and "communication" and "forwarding" are collectively referred to as "transfer". In addition, 'performing transmission or reception on the AC link (by using beams)' may be equivalent to 'performing forwarding on the AC link (by using beams)', and 'performing transmission or reception on the control link' may be equivalent to 'performing communication on the control link'. The above terms are for convenience of explanation only, and are not intended to limit this disclosure.

For the sake of convenience, channels/signals for direct communication between a network device and a repeater or between a third equipment (such as a terminal equipment) and the repeater may be referred to as communication signals. When communication signals are transmitted, the repeater needs to perform encoding and/or modulation, and when communication signals are received, the repeater needs to perform decoding and/or demodulation. In addition, channels/signals forwarded by the repeater may be referred to as forwarded signals, and the repeater may amplify the forwarded signals, but will not perform decoding and/or demodulation.

In the embodiments of this disclosure, the repeater may also be expressed as an NCR, an RF repeater, a relay, an RF replay; or, it may also be expressed as a repeater node, or a relay node; or, it may also be expressed as an intelligent repeater, an intelligent relay, an intelligent repeater node, an intelligent replay node, etc.; however, this disclosure is not limited thereto.

In the embodiments of this disclosure, the network device may be a device of a serving cell of the terminal equipment, or a device in a cell where the repeater is located, or a device of a serving cell of the repeater, or a parent node of the repeater. Names of the repeater are not limited in this disclosure, and any device able to achieve the above functions is included in the scope of the repeater of this disclosure.

In the embodiments of this disclosure, the beam may also be expressed as a reference signal (RS), a transmission configuration indication (TCI), or a spatial domain filter, etc., or may be expressed as a beam index, a reference signal index, a transmission configuration indication index, or a spatial domain filter index, etc. The above reference signal is, for example, a channel state information reference signal (CSI-RS), or a sounding reference signal (SRS), or an RS for use by the repeater, or an RS transmitted by the repeater, etc. And the above TCI may also be expressed as a TCI state; however, the embodiments of this disclosure are not limited thereto.

Following description shall be given with reference to the embodiments.

### Embodiments of a first aspect

The embodiments of this disclosure provide an information indication method, which shall be described from a side of a repeater.

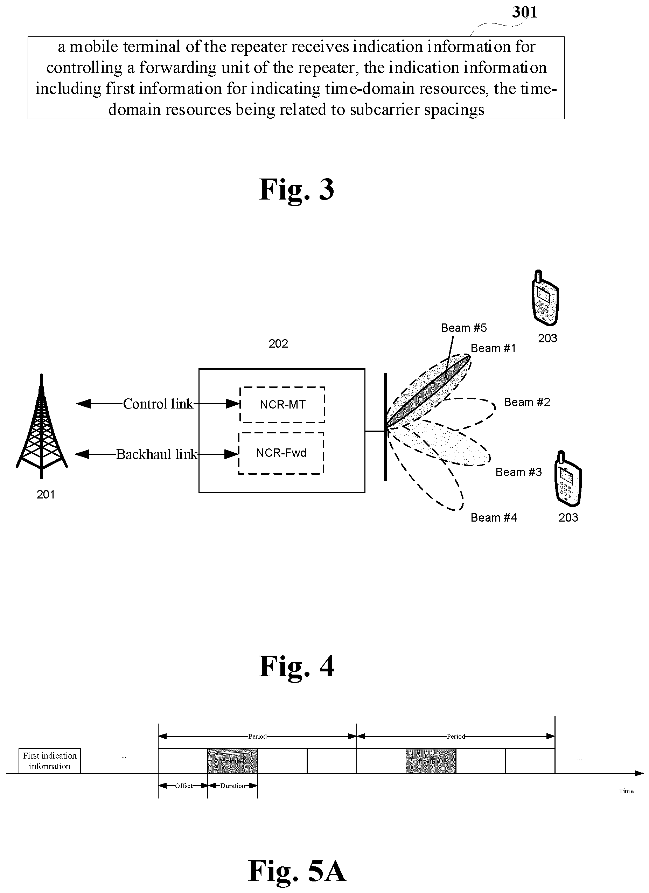

FIG. 3 is a schematic diagram of the information indication method of the embodiments of this disclosure. As shown in FIG. 3, the method includes:
301: a mobile termination of the repeater receives indication information for controlling a forwarding unit of the repeater, the indication information including first information for indicating time-domain resources, the time-domain resources being related to subcarrier spacings.

It should be noted that FIG. 3 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 3.

In some embodiments, the indication information may be first indication information used to control an access link beam of the repeater, or second indication information used to control on/off of the forwarding unit of the repeater, or third indication information used to a control backhaul link beam of the repeater, which shall be described below in detail.

### (I) Related to the first indication information

In some embodiments, the AC link beam may also be referred to as a terminal equipment side beam, which is a receiving beam/transmitting beam used by the repeater in an AC link, wherein the transmitting beam forwards signals from the network device to the terminal equipment, and the receiving beam forwards signals from the terminal equipment to the network device. A beam (of an antenna) refers to, for example, a main lobe of a radiation pattern of an antenna array.

In some embodiments, the repeater may support multiple beams (or antenna beams) of different directions and/or widths, and there may exist a correlation between the beams. For example, that there may exist a correlation between first beams and second beams includes that beam center directions of the first beams and the second beams are identical, and/or beam peak directions of the first beams and the second beams are identical, and/or the first beams and the second beams are quasi-colocated (such as QCL type D), and/or the first beams are within a range of the second beams, or the second beams are within a range of the first beams, and/or beam widths of the first beams are within a range of beam widths of the second beams, and/or beam widths of the second beams are within a range of beam widths of the first beams. The beam center direction refers to a geometric center of a half power contour of the beam, and the beam peak direction refers to, for example, a direction of maximum EIRP of the beam.

FIG. 4 is a schematic diagram of the AC link beam of the NCR of the embodiments of this disclosure. As shown in FIG. 4, the repeater may support multiple beams of different directions and/or widths, beam #1, beam#2, beam#3, beam#4, beam#5, and for example there exists a correlation between beam #1 and beam #5.

In some embodiments, the repeater explicitly and/or implicitly reports the number of beams supported by its AC link and/or an association between the beams to the terminal equipment.

For example, the repeater directly reports the number of beams supported by the AC link, such as one of 1/2/4/8.

For another example, the repeater reports the number of beams and the association between the beams. For example, the number of first beams is one of 1/2/4/8, and the number of second beams is one of 1/2/4/8 (with a value range identical to or different from that of the first beams). If the number of second beams is M, each first beam is associated with M second beams.

For a further example, the repeater reports the number of beams and the association between the beams. For example, the number of first beams is one of 1/2/4/8, and the number of second beams is one of 1/2/4/8/16/32/64. If the number of first beams is N and the number of second beams is M, each first beam is associated with, for example, M/N second beams.

For still another example, the repeater reports the number of beams and the association between the beams. For example, the number of first beams is one of 1/2/4/8, and the number of second beams associated with different first beams may be different. For example, different first beams correspond respectively to 1/2/4/8 second beams.

For yet another example, the repeater reports the number of beams and the association between the beams, reports a total number of beams and the number N of first beams, hence, it indirectly reports the number M of second beams and second beams with which each first beam is associated.

The correlation between the second beams and the first beams is as described above, and the first beams are referred to as, for example, source beams of the second beams, or QCL source beams.

In some embodiments, in order to control the access link beams of the repeater, the network device transmits first indication information used for controlling the access link beams of the repeater to the repeater, the first indication information including access link beam indication information, and/or identification information, and/or packet information, and/or priority information, and/or first information for indicating first time-domain resources to which the access link beams correspond.

In some embodiments, the first indication information is carried by at least one of first RRC signaling, first MAC signaling and first PHY signaling, wherein the first PHY signaling may be first DCI, such as unicast DCI or group common DCI. On the other hand, a format of the first DCI may be a legacy DCI format (such as 1_1, 2_0) or a newly-introduced DCI format.

In some embodiments, the first indication information may indicate which beam the repeater shall use (for forwarding) in a certain period of time. That is, the first indication information at least includes access link beam indication information for indicating the AC link beam, which may be a beam index. The indicated beam is one of the first beams, and a range that may be indicated by it does not include the second beams. However, the embodiments of this disclosure are not limited thereto, and the indicated beam may also include the second beams.

In some embodiments, the first indication information may further include first information for indicating a time-domain resource (first time-domain resource) to which the beam indicated by it corresponds, wherein the time-domain resource (first time-domain resource) to which the beam corresponds refers to a time period in which the beam is used for forwarding.

In some embodiments, the beam indicated in the first indication information is periodic or semi-persistent (both of which may also be referred to as semi-static) or aperiodic (or dynamic), or, in other words, correspondingly, the time-domain resource (first time-domain resource) to which the beam indicated in the first indication information corresponds is periodic, or semi-persistent, or aperiodic.

### I. The first time-domain resource is periodic or semi-persistent

In some embodiments, the first indication information is carried by the first RRC signaling, the first RRC signaling including one or more first configuration information, the first configuration information including all information in the first indication information.

In some embodiments, the first indication information is carried by the first MAC signaling, the first MAC signaling including one or more first configuration information, the first configuration information including all information in the first indication information.

In some embodiments, the first indication information is carried by the first RRC signaling and the first MAC signaling and/or the first PHY signaling, the first RRC signaling including one or more first configuration information, the first configuration information including all or a part of information in the first indication information, the first MAC signaling and/or the first PHY signaling further including identification information for indicating one or more first configurations in the multiple first configuration information and/or a part of information in the first indication information.

In some embodiments, the first indication information is carried by the first MAC signaling and the first PHY signaling, the first MAC signaling including one or more first configuration information, the first configuration information including all or a part of information in the first indication information, and the first PHY signaling further including identification information for indicating one or more first configurations in the multiple first configuration information and/or a part of information in the first indication information.

The first information includes information indicating first time-domain resources in a period and/or period information. The first configuration information includes all or a part of information in the first information indicating the first time-domain resource, and the first MAC signaling and/or the first PHY signaling include(s) a part of information in the first information.

The part of information in the first information included in the first configuration information includes period information, and the part of information in the first information included in the first MAC signaling and/or the first PHY signaling includes information used to indicate first time-domain resources in a period.

The information used to indicate first time-domain resources in a period includes information of at least one first duration and/or information of at least one first offset, the first duration including a millisecond-level duration and/or a slot-level duration and/or a symbol-level duration, and the first offset includes a millisecond-level offset and/or a slot-level offset and/or a symbol-level offset.

Following description shall be given by way of examples.

In some embodiments, the first indication information may be carried only by first RRC signaling.

The first RRC signaling may include one or more first configuration information, the first configuration information including all information in the first indication information. That is, the repeater may receive one or more first indication information carried by the first RRC signaling. First information included in one first indication information may include information indicating first time-domain resources in a period and/or period information. The information used to indicate the first time-domain resources in a period includes information of at least one first duration and/or information of at least one first offset of the first time-domain resources. For example, the first information may include one period information, information of one or more first offset and information of one or more first duration. The beams indicated by the access link beam indication information includes one or more beams, wherein one beam corresponds to information of one or more first offset and/or information of one or more first duration, and different beams correspond to information of identical or different first offset, and/or, different beams correspond to information of identical or different first duration. The above first offset refers to an offset between a starting position of a time-domain resource in a period corresponding to a beam and a reference position. The reference position may be a starting position of a system frame after receiving the first RRC signaling, or an ending position of a time-domain resource to which other beam corresponds; however, the embodiments of this disclosure are not limited thereto.

In some embodiments, the above period and/or first duration and/or first offset include(s) at least one time unit, and the first information indicates the above period and/or first duration and/or first offset by indicating the number of the time units, wherein the at least one time unit is continuous in the time domain, or is discontinuous in the time domain. The time unit is, for example, a subframe, a slot, a symbol, a mini-slot, and a millisecond, etc., that is, the period includes a millisecond-level period and/or a slot-level period and/or a symbol-level period, the first duration includes a millisecond-level duration and/or a slot-level duration and/or a symbol-level duration, the first offset includes a millisecond-level offset and/or a slot-level offset and/or a symbol-level offset, and (lengths of time units of) the first time-domain resources are related to the subcarrier spacings. How to determine the first time-domain resources according to the subcarrier spacings shall be described later.

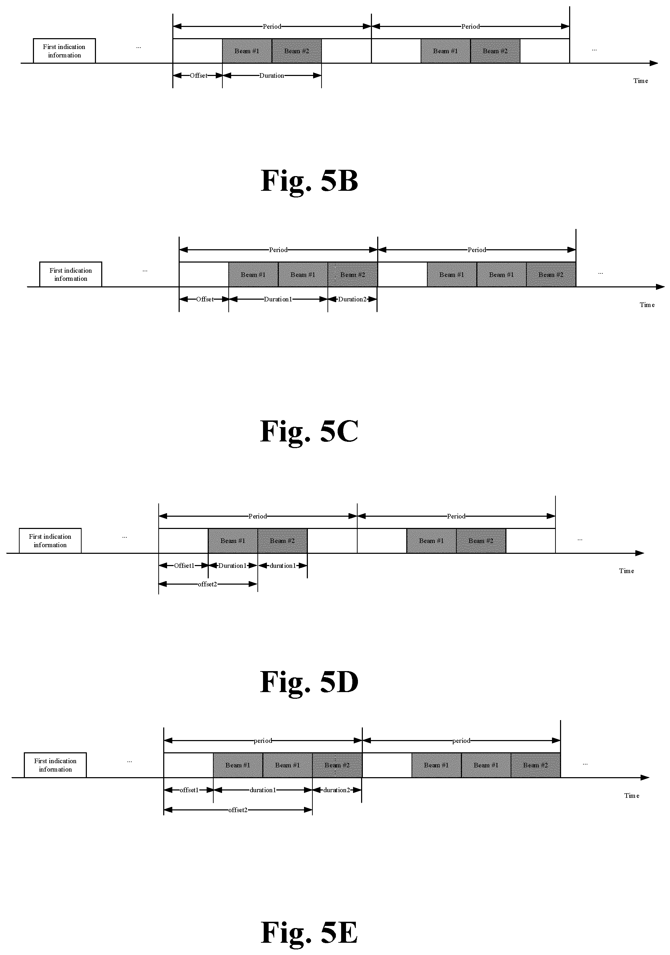

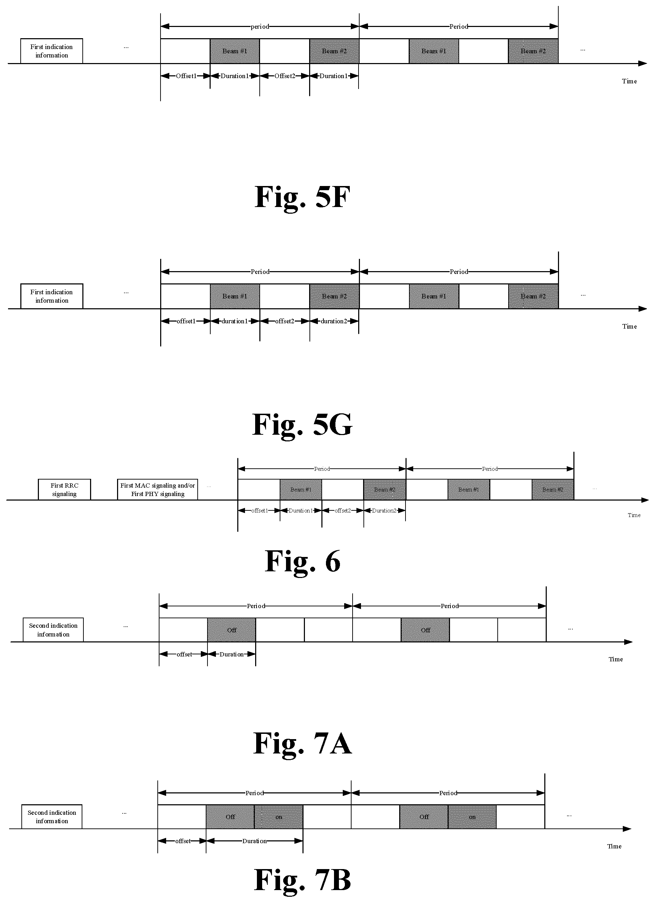

FIGs. 5A-5G are schematic diagrams of the first indication information of this disclosure. As shown in FIG. 5A, the indicated beam is Beam #1, corresponding to a first offset and a first duration. As shown in FIG. 5B, the indicated beams are Beam #1, Beam #2, corresponding to a first offset and a first duration, and a first duration of each beam may be determined according to the implementation. As shown in FIG. 5C, the indicated beams are Beam #1, Beam #2, corresponding to one first offset and two first durations, each corresponding to Beam #1, Beam #2. As shown in FIG. 5D, the indicated beams are Beam #1, Beam #2, corresponding to two first offsets and one first duration, the two first offsets corresponding to Beam #1 and Beam #2, respectively, reference positions of the first offsets being identical, and first durations of the two beams being identical. As shown in FIG. 5E, the indicated beams are Beam #1, Beam #2, corresponding to two first offsets and two first durations, the two first offsets corresponding to Beam #1 and Beam #2, respectively, and the two first durations corresponding to Beam #1 and Beam #2, respectively. As shown in FIG. 5F, the indicated beams are Beam #1, Beam #2, corresponding to two first offsets and one first duration, the two first offsets corresponding to Beam #1 and Beam #2, respectively, and Beam #1 and Beam #2 corresponding to the same first duration. As shown in FIG. 5G, the indicated beams are Beam #1, Beam #2, corresponding to two first offsets and two first durations, the two first offsets corresponding to Beam #1 and Beam #2, respectively, the two first durations corresponding to Beam #1, Beam #2, respectively, with a difference from FIG. 5E is that reference positions of first offset 2 are different.

Beam #1 and Beam #2 are taken as examples of the beams in FIGs. 5A-5G. However, this disclosure is not limited thereto, and other numbers of beams may also be indicated. In addition, time-domain resources to which the same beam in a period corresponds are continuous. However, this disclosure is not limited thereto, and they may also be discontinuous (for example, one beam corresponds to information of multiple first offsets and/or multiple first duration, hence, discontinuous time-domain resources may be configured).

The above one or more first indication information is/are included in an information element/field (IE/field) of the first RRC signaling. The IE/field may be repeater-specific, i.e. the IE/field is only applicable to the repeater, and is used to control the forwarding unit of the repeater. The IE/field may also include, for example, the above second indication information and/or third indication information, or, the first indication information may include the above second indication information and/or third indication information, or the first indication information may be taken as the second indication information, which shall be descried later by way of examples.

In some embodiments, the first indication information is carried by the first RRC signaling, or the first MAC signaling and/or the first PHY signaling. Implementation of the first RRC signaling is as described above, and the first MAC signaling and/or the first PHY signaling is/are used to activate and/or deactivate one or more first configurations in the multiple first configuration information. For example, the first MAC signaling and/or the first PHY signaling further include(s) identification information for indicating one or more first configurations in the multiple first configuration information.

For example, multiple first configuration information are included in the first RRC signaling, the identification information in the first MAC signaling and/or the first PHY signaling is first configuration to which one or more activated first indication information correspond(s), and the repeater performs forwarding in a corresponding time-domain resources by using a corresponding beam according to the activated first configuration. For example, the first RRC signaling includes 8 first configuration information and the first MAC signaling is 00000010, seventh first configuration information is activated, which shall not be enumerated herein any further. FIG. 6 is a schematic diagram of the first indication information of the embodiments of this disclosure. As shown in FIG. 6, the first indication information is carried by the first RRC signaling and the first MAC signaling, and the seventh first configuration information is activated. Beams indicated in the seventh first configuration information is Beam #1, Beam#2, and the first information includes two first offsets and two first durations, corresponding to Beam #1 and Beam #2, respectively.

In some embodiments, when the first PHY signaling is used for activation, it may be directly activated based on configuration of the first RRC signaling, or may be activated based on further configuration of the first MAC signaling (i.e. activated and/or deactivated via an MAC CE and DCI).

In some embodiments, the first indication information is carried by first MAC signaling and first PHY signaling, wherein the first MAC signaling includes one or more first configuration information, implementation of the first configuration information being similar to that of the first RRC signaling, and the first PHY signaling is used to activate and/or deactivate one or more first configurations in the multiple first configuration information. For example, the first PHY signaling further includes identification information for indicating one or more first configurations in the multiple first configuration information, and the repeater performs forwarding in a corresponding time-domain resources by using a corresponding beam according to an activated configuration.

In some embodiments, the first indication information is carried by the first RRC signaling and the first MAC signaling and/or the first PHY signaling. A difference from the previous embodiments is that various information (the period and/or at least one first duration and/or at least one first offset) of the first information are not all contained in one signaling, but are respectively carried by the first RRC signaling and the first MAC signaling and/or the first PHY signaling. For example, a part of information in the first information included in the first configuration information includes the period information, and a part of information in the first information included in the first MAC signaling and/or the first PHY signaling includes information for indicating the first time-domain resources in a period (information of at least one first duration and/or information of at least one first offset). However, the embodiments of this disclosure are not limited thereto, for example, the part of information in the first information included in the first configuration information includes the period information and information of at least one first duration, and the first MAC signaling and/or the first PHY signaling include(s) information of at least one first offset; or, for example, the part of information in the first information included in the first configuration information includes the period information, information of at least one first duration and information of at least one first offset, and the first MAC signaling and/or the first PHY signaling include(s) information of one or more first duration and information of one or more first duration in the information of at least one first duration and the information of at least one first offset, which shall not be enumerated herein any further.

In the above example, the first PHY signaling includes one or more first information fields, at least one of which being used to indicate the first time-domain resources. The first information fields include time-domain resource allocation information fields, TDRA tables to which different time-domain resource allocation information fields correspond being identical or different. Reference may made to the exemplification in "II" described later for how the first information field indicates (the first duration and/or the first offset of) the first time-domain resources.

It should be noted that time units of the information of the first duration carried by the first RRC signaling and the first MAC signaling and/or the first PHY signaling are identical or different. For example, time units of information of the first duration to which different beams correspond are identical or different, or a time unit of information of the first duration carried by the first RRC signaling is identical to or different from that of the information of the first duration carried by the first PHY signaling corresponding to identical beam, which shall not be enumerated herein any further. The time units of the information of the first offset carried by the first RRC signaling and the first MAC signaling and/or the first PHY signaling are identical or different. For example, time units of information of the first offset to which different beams correspond are identical or different, or a time unit of the information of the first offset carried by the first RRC signaling is identical to or different from that of the information of the first offset carried by the first PHY signaling corresponding to identical beam, which shall not be enumerated herein any further.

### II. The first time-domain resources are aperiodic

In some embodiments, the first indication information is carried by the first PHY signaling, which includes one or more first information fields, at least one of the first information fields being used to indicate the first time-domain resources. The first information fields include a time-domain resource allocation information field. TDRA tables to which different time-domain resource allocation information fields correspond are identical or different, and the one or more first information fields are used to indicate information of at least one second duration and/or information of at least one second offset. For example, the first PHY signaling may be the above first DCI, the repeater receives the first DCI, and the first DCI includes one or more first indication information, wherein the first information used to indicate the first time-domain resources to which the beam corresponds is indicated by the first information field included in the first DCI; however, the embodiments of this disclosure are not limited thereto.

In some embodiments, the time-domain resource allocation (TDRA) table (or TDRA table in brief) includes at least one row, one row referred to as one TDRA configuration for ease of description, i.e. the TDRA table includes at least one TDRA configuration. A TDRA configuration includes at least one time-domain resource configuration, which includes at least a symbol position (a starting symbol + a length) configuration in a slot. In addition, a TDRA configuration may further include at least one slot offset K0 configuration, which is included or not included in the time-domain resource configuration. The TDRA configuration may further include other information (such as a mapping type), which is included or not included in the time-domain resource configuration, and the embodiments of this disclosure are not limited thereto. Regarding the symbol position configuration in a slot, it includes, for example, a start and length indicator SLIV, which corresponds to a valid combination of a starting symbol (S) and length (L), or, for example, it corresponds to a starting symbol configuration and length configuration, and the starting symbol configuration and length configuration are a valid combination.

For example, the first DCI includes one or more TDRA information fields, wherein one TDRA information field indicates one row of TDRA configurations, and TDRA tables to which different time-domain resource allocation information fields correspond are identical or different.

For example, the first DCI includes a TDRA information field, the TDRA information field (equivalent to the first information in the first indication information) being used to indicate the first time-domain resources to which the access link beam corresponds. Assuming that the first DCI may further be used to schedule a PDSCH/PUSCH of the NCR-MT, when the first DCI is used to schedule the PDSCH/PUSCH of the NCR-MT, the TDRA field is used to indicate fourth time-domain resources to which the PDSCH/PUSCH correspond(s), and when the DCI is not used to schedule the PDSCH/PUSCH of the NCR-MT and is used to control the access link beam of the forwarding unit, the TDRA field is used to indicate the first time-domain resources to which the beams correspond. In both cases, TDRA tables to which the TDRA information field corresponds are identical or different. That is, the TDRA tables used by the first time-domain resources and the fourth time-domain resources are identical or different.

For another example, the first DCI includes two TDRA fields, one indicating the first time-domain resources to the access link beam corresponds, and the other indicating the fourth time-domain resources to which the PDSCH/PUSCH of the NCR-MT correspond(s). Hence, the first DCI may support simultaneously used for scheduling the PDSCH/PUSCH of the NCR-MT and controlling a forwarding behavior (indicating the access link beam) of the forwarding unit.

For a further example, the first DCI includes multiple TDRA fields, at least two of the TDRA fields being used to indicate the first time-domain resources to which identical or different beams correspond indicated by the first DCI.

In the above examples, the repeater may support one or more of the above modes, and the method may further include: the repeater reports capability information to the network device, wherein the capability information is used to notify the network device of an information indication mode supported by the repeater, and the network device may control beams of the repeater according to the capability information in the method supported by the repeater.

In the above examples, a TDRA information field (with a bit value of a configured row number) is used to indicate a TDRA configuration. The TDRA configuration is similar to the above first configuration information, and the TDRA configuration (a first information) includes information of at least one second duration and/or information of at least one second offset of the first time-domain resources. The information of second offset may correspond to the above K0 configuration, and refers to an offset between the starting position of the first time-domain resources and an ending position of the PDCCH carrying the first DCI; however, the embodiments of this disclosure are not limited thereto. For example, the second offset may be an offset between a starting position of a first time-domain resource to which a beam corresponds and an ending position of a first time-domain resource to which a beam preceding the beam corresponds, and the information of second duration may correspond to the above SLIV configuration.

In some embodiments, a TDRA configuration may include information of at least one second duration and/or information of at least one second offset of the first time-domain resources. The above second duration and/or second offset include(s) at least one time unit, wherein the first information indicates the second duration and/or second offset by indicating the number of the time units, and the at least one time unit is continuous in the time domain, or is discontinuous in the time domain. The time unit is, for example, a subframe, a slot, a symbol, a mini-slot, and a millisecond, etc., that is, the second duration includes a millisecond-level duration and/or a slot-level duration and/or a symbol-level duration, the second offset includes a millisecond-level offset and/or a slot-level offset and/or a symbol-level offset, and (lengths of time units of) the first time-domain resources are related to the subcarrier spacings. The time units of the information of the at least one second duration are identical or different, and the time units of the information of the at least one second offset are identical or different, which shall not be enumerated herein any further. How to determine the first time-domain resources according to the subcarrier spacings shall be described later, and parts repeated with those in 'I' shall not be described herein any further.

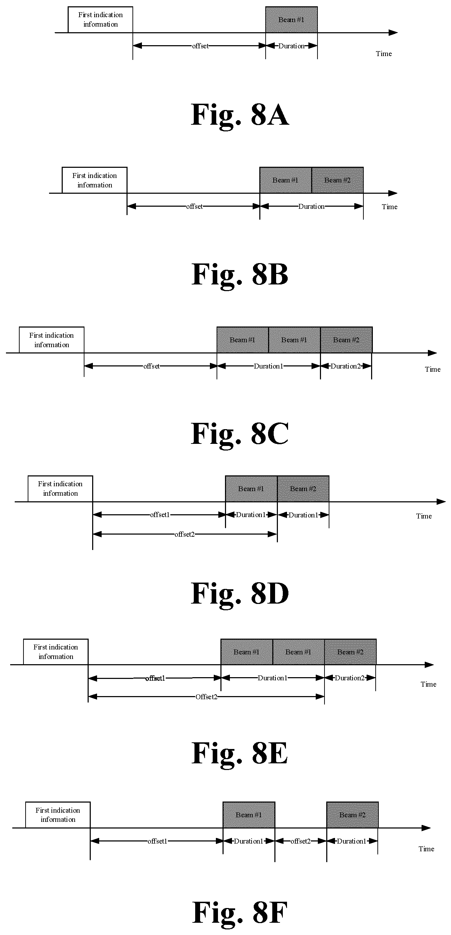

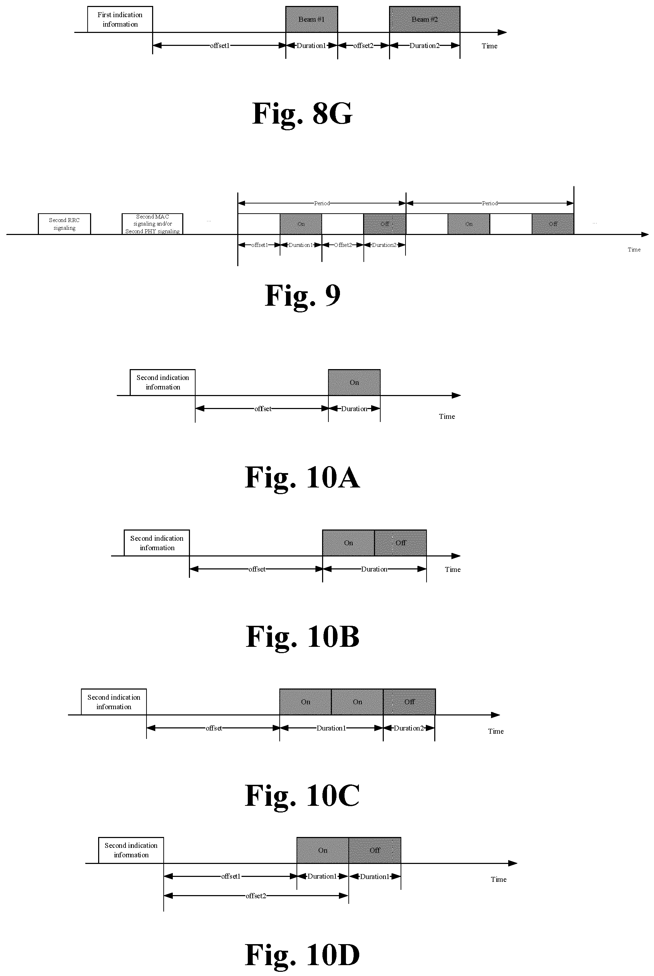

FIGs. 8A-8G are schematic diagrams of the first indication information of the embodiments of this disclosure. As shown in FIG. 8A, the indicated beam is Beam #1, corresponding to a second offset and a second duration. As shown in FIG. 8B, the indicated beams are Beam #1, Beam #2, corresponding to a second offset and a second duration, and a second duration of each beam may be determined according to the implementation. As shown in FIG. 8C, the indicated beams are Beam #1, Beam #2, corresponding to one second offset and two second durations, each corresponding respectively to Beam #1, Beam #2. As shown in FIG. 8D, the indicated beams are Beam #1, Beam #2, corresponding to two second offsets and one second duration, the two second offsets corresponding to Beam #1 and Beam #2, respectively, reference positions of the second offsets being identical, and second durations of the two beams being identical. As shown in FIG. 8E, the indicated beams are Beam #1, Beam #2, corresponding to two second offsets and two second durations, the two second offsets corresponding to Beam #1 and Beam #2, respectively, and the two second durations corresponding to Beam #1 and Beam #2, respectively. As shown in FIG. 8F, the indicated beams are Beam #1, Beam #2, corresponding to two second offsets and one second duration, the two second offsets corresponding to Beam #1 and Beam #2, respectively, and Beam #1 and Beam #2 corresponding to the same second duration. As shown in FIG. 8G, the indicated beams are Beam #1, Beam #2, corresponding to two second offsets and two second durations, the two second offsets corresponding to Beam #1 and Beam #2, respectively, the two second durations corresponding to Beam #1, Beam #2, respectively. FIG. 8F and FIG. 8G differ from FIG. 8E in that a reference position of second offset 2 is different.

Beam #1 and Beam #2 are taken as examples of the beams in FIGs. 8A-8G. However, this disclosure is not limited thereto, and other numbers of beams may also be indicated. In addition, the first time-domain resources are continuous. However, this disclosure is not limited thereto, and they may also be discontinuous (for example, one beam corresponds to information of multiple second offsets and/or multiple second duration, hence, discontinuous time-domain resources may be configured).

In some cases, the first time-domain resources to which different beams indicated by the first indication information correspond may overlap (partially or completely). For example, the received first RRC signaling includes multiple first configuration information (first indication information), and first time-domain resources to which two or more of the beams indicated by different first indication information correspond may overlap. However, the repeater may not have a capability to simultaneously forward by using the two or more beams. Hence, the method further includes: the repeater determines which beam should be used in an overlapped part in the first time-domain resource according to an instruction of the network device and/or a predefined method.

In some embodiments, the repeater may determine which beam should be used in the overlapped part of the first time-domain resource according to the instruction of the network device.

For example, the first indication information may further include priority information and/or identification information and/or packet information. The repeater performs forwarding by using a beam indicated by first indication information with a highest priority and/or a smallest identification, wherein the identification may be determined according to the identification information and/or the packet information, for example, the above second beams associated with the first beams are in the same group. The packet information may be a group index, and the identification information may be an identifier of a second beam in a group, etc., which shall not be enumerated herein any further.

What described above is an example only, and the priority information and/or the identification information and/or the packet information may not be included in the first indication information, but may be included in fourth indication information separately transmitted by the network device, and the embodiments of this disclosure are not limited thereto.

In some embodiments, the repeater may determine which beam should be used in the overlapped part in a first time-domain resource according to a predefined rule.

For example, if the above two or more beams include one first beam, the first beam is used. (Remaining beams are or are not the second beams associated with the first beams.)

For another example, a beam in the above two or more beams with a smallest index is used.

For a further example, if the above two or more beams include multiple first beams, a beam in the multiple first beams with a smallest index is used.

For still another example, multiple first indication information are included in the same list (multiple first configuration information are included in the same configuration list), and according to positions/orders of the first indication information in the list, the repeater determines which beam is used. For example, if one of the above two or more beams is indicated by first one of the first indication information in the list, a beam indicated by the first one of the first indication information is used, and if one of the above two or more beams is indicated by second one of the first indication information in the list and there is no beam indicated by the first one of the first indication information in the list, a beam indicated by the second one of the first indication information is used, and so on.

### (II) Related to the second indication information

In some embodiments, in order to enable the repeater to have a function of controlling on/off of a forwarding unit, the repeater may receive the second indication information for controlling on/off state(s) of the forwarding unit of the repeater. The second indication information may indicate whether the forwarding unit of the repeater is in an on state or an off state in a certain period of time (the second time-domain resources).

In some embodiments, the first indication information may be taken as the second indication information, and is used to implicitly indicate the on/or off state(s) of the forwarding unit.

In some embodiments, the second indication information may include the first indication information and/or information indicating uplink and downlink directions, and the first indication information and/or information indicating uplink and downlink directions is/are used to implicitly indicate the on/or off state(s) of the forwarding unit.

For example, on the first time-domain resources to which the beams indicated by the first indication information correspond, the forwarding unit is in the on state, and for other time-domain resources, the forwarding unit is in the off state (by default), and/or, on the flexible time-domain resources indicated by the information indicating uplink and downlink directions, the forwarding unit is in the off state (by default); and/or, on time-domain resources in the first time-domain resources to which the beams indicated by the first indication information correspond and indicated by the information indicating uplink and downlink directions as flexible time-domain resources, the forwarding unit is in the off state (by default).

When the first indication information is used to implicitly indicate the on/off state(s) of the forwarding unit, the first time-domain resources indicated by the first information of the first indication information may also be referred to as second time-domain resources to which the on (and/or off) state of the forwarding unit corresponds, and the first subcarrier spacing and/or the second subcarrier spacing to which the first time-domain resources correspond may also be referred to as a third subcarrier spacing and/or a fourth subcarrier spacing for the second time-domain resources, which shall be described in detail later. In some embodiments, the second indication information includes third information for indicating on/off state(s), and/or first information for indicating second time-domain resources to which the on/off correspond(s).

For example, the second indication information only includes the third information for indicating the on/off state, based on the third information, the second time-domain resources or a starting position of the second time-domain resources may be determined according to the predefined rule, and the forwarding unit is in the on/off state(s) starting from the starting position, until new second indication information is received, and corresponding behaviors are executed according to the new second indication information.

For another example, the second indication information only includes the first information for indicating the second time-domain resources to which the on/off correspond(s). For example, the second indication information is only used to indicate the second time-domain resources to which the on state corresponds or is only used to indicate the second time-domain resources to which the off state corresponds. Hence, there is no need to explicitly include the third information in the second indication information, and the on/off state(s) may be determined according to the first information.

In some embodiments, the second indication information includes the above first indication information and third information (and optionally, it may further include the information indicating uplink and downlink directions).

For example, the third information is only used to indicate the off state. On the first time-domain resources (the second time-domain resources) corresponding to the beams indicated by the first indication information and not indicated as being in the off state by the third information, the forwarding unit is in the on state, and for other time-domain resources, the forwarding unit is in the off state (by default).

For another example, the third information is only used to indicate the off state. On the first time-domain resources (the second time-domain resources) corresponding to the beams indicated by the first indication information (and not indicated as being in the off state by the third information and indicated as being flexible by the information indicating uplink and downlink directions), the forwarding unit is in the on state, and for other time-domain resources, the forwarding unit is in the off state (by default).

In some embodiments, the second indication information is carried by at least one of second RRC signaling, second MAC signaling, or second PHY signaling, wherein the second PHY signaling may be second DCI, such as unicast DCI or group common DCI. On the other hand, a format of the second DCI may be a legacy DCI format (such as 1_1, 2_0) or a newly-introduced DCI format. The second RRC signaling and the first RRC signaling may be identical or different RRC signaling, the second MAC signaling and the first MAC signaling may be identical or different MAC signaling, and the first PHY signaling and the second PHY signaling may be identical or different PHY signaling; however, the embodiments of this disclosure are not limited thereto.

In some embodiments, the second time-domain resources indicated in the second indication information (indicated by the first information) are periodic or semi-persistent (the former two may also be referred to as being semi-static) or aperiodic (or dynamic), or, in other words, correspondingly, the time-domain resources (second time-domain resources) to which the on/off states correspond indicated in the second indication information are periodic, semi-persistent, or aperiodic.

### I. The second time-domain resources are periodic or semi-persistent

In some embodiments, the second indication information is carried by the second RRC signaling, the second RRC signaling including one or more second configuration information, the second configuration information including all information in the second indication information.

In some embodiments, the second indication information is carried by the second MAC signaling, the second MAC signaling including one or more second configuration information, the second configuration information including all information in the second indication information.

In some embodiments, the second indication information is carried by the second RRC signaling and the second MAC signaling and/or the second PHY signaling, the second RRC signaling including one or more second configuration information, the second configuration information including all or a part information in the second indication information, the second MAC signaling and/or the second PHY signaling further including identification information for indicating one or more second configurations in the multiple second configuration information and/or a part of information in the second indication information.

In some embodiments, the second indication information is carried by the second MAC signaling and the second PHY signaling, the second MAC signaling including one or more second configuration information, the second configuration information including all or a part of information in the second indication information, and the second PHY signaling further including identification information for indicating one or more second configurations in the multiple second configuration information and/or a part of information in the second indication information.

The first information includes information indicating the second time-domain resources in a period and/or period information. The second configuration information includes all or a part of information in the first information indicating the second time-domain resources, and the second MAC signaling and/or the second PHY signaling include(s) a part of information in the first information.

The part of information in the first information included in the second configuration information includes period information, and the part of information in the first information included in the second MAC signaling and/or the second PHY signaling includes information indicating the second time-domain resources in a period.

The information used to indicate the second time-domain resources in a period includes information of at least one third duration and/or information of at least one third offset, the third duration including a millisecond-level duration and/or a slot-level duration and/or a symbol-level duration, and the third offset including a millisecond-level offset and/or a slot-level offset and/or a symbol-level offset.

Following description shall be given by way of examples.

In some embodiments, the second indication information may be carried by the second RRC signaling.

The second RRC signaling may include one or more second configuration information, the second configuration information including all information of the second indication information, that is, the repeater may receive one or more second indication information carried by the second RRC signaling. The first information included in one second indication information may include information for indicating the second time-domain resources in a period and/or period information. The information for indicating the second time-domain resources in a period includes information of at least one third duration and/or information of at least one third offset of the second time-domain resources. For example, the first information may include one period information, information of one or more third offset, and information of one or more third duration. On/off state(s) correspond to information of one or more third offset and/or information of one or more third duration, and the on/off state(s) correspond to information of identical or different third offset, and/or the on/off state(s) correspond to information of identical or different third duration. The above third offset refers to an offset between a starting position of the time-domain resources in a period corresponding to the on/off state(s) and a reference position, the reference position being a starting position of a system frame after the second RRC signaling is received, or an ending position of time-domain resources to which other on/off state(s) correspond, etc.; however, the embodiments of this disclosure are not limited thereto.

In some embodiments, the above period and/or third duration and/or third offset include(s) at least one time unit, and the first information indicates the above period and/or third duration and/or third offset by indicating the number of the time units, wherein the at least one time unit is continuous in the time domain, or is discontinuous in the time domain. The time unit is, for example, a subframe, a slot, a symbol, a mini-slot, and a millisecond, etc., that is, the period includes a millisecond-level period and/or a slot-level period and/or a symbol-level period, the third duration includes a millisecond-level duration and/or a slot-level duration and/or a symbol-level duration, the third offset includes a millisecond-level offset and/or a slot-level offset and/or a symbol-level offset, and (lengths of time units of) the second time-domain resources are related to the subcarrier spacings. How to determine the second time-domain resources according to the subcarrier spacings shall be described later.

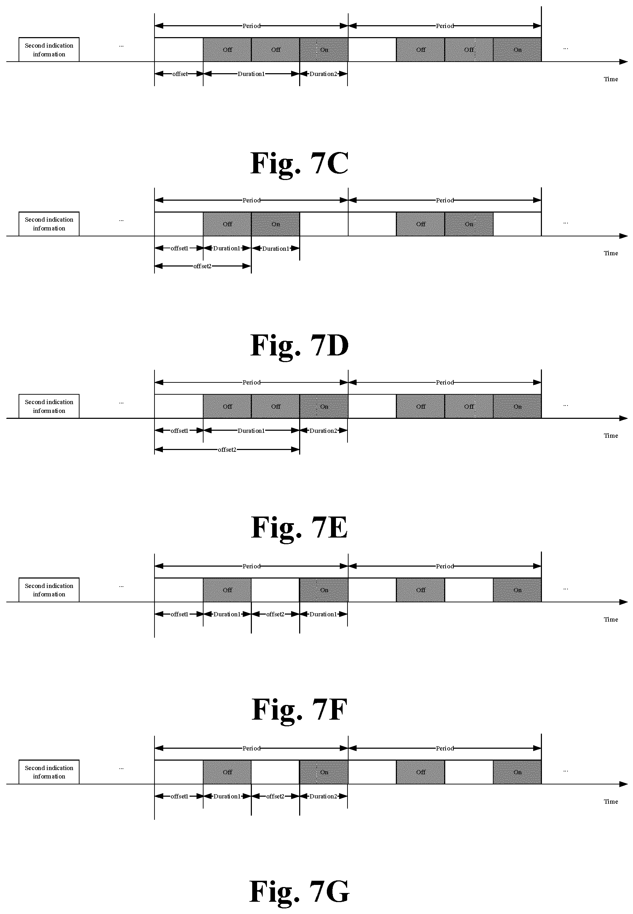

FIGs. 7A-7G are schematic diagrams of the second indication information of this disclosure. As shown in FIG. 7A, the indicated second time-domain resource is in the off state, corresponding to a third offset and a third duration. As shown in FIG. 7B, a second time-domain resource to which the on state corresponds and a second time-domain resource to which the off state corresponds are respectively indicated, corresponding to a third offset and a third duration, and a third duration of each state may be determined according to the implementation. As shown in FIG. 7C, a second time-domain resource to which the on state corresponds and a second time-domain resource to which the off state corresponds are respectively indicated, corresponding to a third offset and two third durations, the two third durations corresponding respectively to the off state and the on state. As shown in FIG. 7D, a second time-domain resource to which the on state corresponds and a second time-domain resource to which the off state corresponds are respectively indicated, corresponding to two third offsets and a third duration, the two third offsets corresponding respectively to the off state and the on state, reference positions to the third offsets being identical, and third durations of the off state and the on state being identical. As shown in FIG. 7E, a second time-domain resource to which the on state corresponds and a second time-domain resource to which the off state corresponds are respectively indicated, corresponding to two third offsets and two third durations, the two third offsets corresponding respectively to the off state and the on state, and the two third durations corresponding respectively to the off state and the on state. As shown in FIG. 7F, a second time-domain resource to which the on state corresponds and a second time-domain resource to which the off state corresponds are respectively indicated, corresponding to two third offsets a one third duration, the two third offsets corresponding respectively to the off state and the on state, and the off state and the on state corresponding to the same third duration. As shown in FIG. 7G, a second time-domain resource to which the on state corresponds and a second time-domain resource to which the off state corresponds are respectively indicated, corresponding to two third offsets and two third durations, the two third offsets corresponding respectively to the off state and the on state, and the two third durations corresponding respectively to the off state and the on state, with a difference from FIG. 7E being that reference position of third offset 2 is different.

Corresponding second time-domain resources in one period in FIGs. 7A-7G are continuous. However, it is not limited thereto, and they may also be discontinuous (for example, an on/off state(s) correspond(s) to information of multiple third offsets and/or multiple third duration, thus, discontinuous time-domain resources may be configured).

The above one or more second indication information are included in an information element/field (IE/field) of the second RRC signaling, which may be repeater-specific, i.e. the IE/field is only applicable to the repeater, and is used to control the forwarding unit of the repeater. For example, the IE/field may further include the above first indication information and/or the third indication information, and the information element/field may be identical to or different from the information element/field in (I), and the embodiments of this disclosure are not limited thereto.

In some embodiments, the second indication information is carried by the second RRC signaling and the second MAC signaling and/or the second PHY signaling, implementation of the second RRC signaling being as described above, and the second MAC signaling and/or the second PHY signaling being used to activate and/or deactivate one or more second configurations in the multiple second configuration information. For example, the second MAC signaling and/or the second PHY signaling further include identification information for indicating one or more second configurations in the multiple second configuration information.

For example, the second RRC signaling includes multiple second configuration information, the identification information in the second MAC signaling and/or the second PHY signaling is second configuration(s) to which one or more activated second indication information correspond, and the repeater switches on and/or switches off the forwarding unit according to time-domain resources to which the activated second configuration corresponds. For example, the second RRC signaling includes 8 second configuration information and the second MAC signaling is 00000010, a seventh second configuration information is activated, which shall not be enumerated herein any further. FIG. 9 is a schematic diagram of the second indication information of the embodiments of this disclosure. As shown in FIG. 9, the second indication information is carried by the second RRC signaling and the second MAC signaling, and the seventh second configuration information is activated. The forwarding unit is on/off according to a corresponding time-domain resource in the seventh second configuration information, and the seventh second configuration information includes two third offsets and two third durations, corresponding to an on state and an off state, respectively.

In some embodiments, when the second PHY signaling is used for activation, it may be directly activated based on configuration of the second RRC signaling, or may be activated based on further configuration of the second MAC signaling (i.e. activated and/or deactivated via an MAC CE and DCI).

In some embodiments, the second indication information is carried by second MAC signaling and second PHY signaling, wherein the second MAC signaling includes one or more second configuration information, implementation of the second configuration information being similar to that of the second RRC signaling, and the second PHY signaling is used to activate and/or deactivate one or more second configurations in the multiple second configuration information. The second PHY signaling further includes identification information for indicating one or more second configurations in the multiple second configuration information, and the repeater switches on and/or switches off the forwarding unit according to an activated configuration.

In some embodiments, the second indication information is carried by the second RRC signaling and the second MAC signaling and/or the second PHY signaling. A difference from the previous embodiments is that various information (the period and/or at least one third duration and/or at least one third offset) of the first information are not all contained in one signaling, but are respectively carried by the second RRC signaling and the second MAC signaling and/or the second PHY signaling. For example, a part of information in the first information included in the second configuration information includes the period information, and a part of information in the first information included in the second MAC signaling and/or the second PHY signaling includes information for indicating the second time-domain resources in a period (information of at least one third duration and/or information of at least one third offset). However, the embodiments of this disclosure are not limited thereto, for example, the part of information in the first information included in the second configuration information includes the period information and information of at least one second duration, and the second MAC signaling and/or the second PHY signaling include(s) information of at least one third offset; or, for example, the part of information in the first information included in the second configuration information includes the period information, information of at least one third duration and information of at least one third offset, and the second MAC signaling and/or the second PHY signaling include(s) information of one or more third duration and one or more third duration in the information of at least one third duration and the at least one third offset, which shall not be enumerated herein any further.

In the above example, the second PHY signaling includes one or more second information fields, at least one of which being used to indicate the second time-domain resources. The second information fields include time-domain resource allocation information fields, TDRA tables to which different time-domain resource allocation information fields correspond being identical or different. Reference may made to the exemplification in "II" described later for how the second information field indicates (the third duration and/or the third offset of) the second time-domain resources.

It should be noted that time units of the information of the third duration carried by the second RRC signaling and the second MAC signaling and/or the second PHY signaling are identical or different. For example, time units of information of third duration to which different beams correspond are identical or different, or a time unit of information of third duration carried by the second RRC signaling is identical to or different from that of information of the third duration carried by the second PHY signaling corresponding to identical beam, which shall not be enumerated herein any further. The time units of the information of the third offset carried by the second RRC signaling and the second MAC signaling and/or the second PHY signaling are identical or different. For example, time units of information of third offset to which different beams correspond are identical or different, or a time unit of the information of the third offset carried by the second RRC signaling are identical to or different from that of the information of third offset carried by the second PHY signaling corresponding to identical beam, which shall not be enumerated herein any further.

### II. The second time-domain resources are aperiodic

In some embodiments, the second indication information is carried by the second PHY signaling, which includes one or more second information fields, at least one of the second information fields being used to indicate the second temporal resources. The second information fields include a time-domain resource allocation information field. TDRA tables to which different time-domain resource allocation information fields correspond are identical or different, and the one or more second information fields are used to indicate information of at least one fourth duration and/or information of at least one fourth offset. For example, the second PHY signaling may be the above second DCI (the second DCI may be the first DCI or DCI different from the first DCI), the repeater receives the second DCI, and the second DCI includes one or more second indication information, wherein the first information used to indicate the second time-domain resources to which the beams correspond is indicated by the second information field included in the second DCI; however, the embodiments of this disclosure are not limited thereto.

For example, the second DCI includes one or more TDRA information fields, wherein one TDRA information field indicates one row of TDRA configurations, and TDRA tables to which different time-domain resource allocation information fields correspond are identical or different.

For example, the second DCI includes a TDRA information field, the TDRA information field (equivalent to the first information in the second indication information) being used to indicate the second time-domain resources to which the on/off state(s) correspond. Assuming that the second DCI may further be used to schedule a PDSCH/PUSCH of the NCR-MT, when the second DCI is used to schedule the PDSCH/PUSCH of the NCR-MT, the TDRA field is used to indicate fourth time-domain resources to which the PDSCH/PUSCH correspond(s), and when the DCI is not used to schedule the PDSCH/PUSCH of the NCR-MT and is used to control a forwarding behavior of the forwarding unit (indicate that the forwarding unit is in the on/off state(s)), the TDRA field is used to indicate the second time-domain resources to which the on/off state(s) of the forwarding unit correspond. In both cases, TDRA tables to which the TDRA information field corresponds are identical or different. That is, the TDRA tables used by the second time-domain resources and the fourth time-domain resources are identical or different.

For another example, the second DCI includes two TDRA fields, one indicating the second time-domain resources to the on/off state(s) of the forwarding unit correspond, and the other indicating the fourth time-domain resources to which the PDSCH/PUSCH of the NCR-MT correspond(s). Hence, the second DCI may support simultaneously scheduling the PDSCH/PUSCH of the NCR-MT and controlling a forwarding behavior of the forwarding unit (indicating that the forwarding unit is in the on/off state(s)).

For a further example, the second DCI includes two TDRA fields, one of the TDRA fields being used to indicate the second time-domain resources to which the on/off state(s) of the forwarding unit correspond, and the other being used to indicate the first time-domain resources to which the access link beam corresponds, and in both of cases, TDRA tables to which the TDRA information field corresponds are identical or different. That is, the TDRA tables used by the second time-domain resources and the first time-domain resources are identical or different.

In the above examples, the repeater may support one or more of the above modes, and the method may further include: the repeater reports capability information to the network device, wherein the capability information is used to notify the network device of an information indication mode supported by the repeater, and the network device may control the on/off state(s) of the forwarding unit of the repeater according to the capability information in the method supported by the repeater.

In some embodiments, the second DCI includes only the third information in the second indication information. The third information is used for indicating that the forwarding unit is in an off state, and a priority of the off state indicated thereby is higher than that of the on state implicitly indicated by the first indication information carried by the first RRC signaling and/or the first MAC signaling, and/or lower than that of the on state implicitly indicated by the first indication information carried by the first DCI.

In some embodiments, if the DCI includes the first indication information, it is unable to include the second indication information, or vice versa. That is, it is an incorrect configuration that the DCI includes both the first indication information and the second indication information, and network device should avoid such a configuration.

In the above example, a TDRA information field (with a bit value of a configured row number) is used to indicate one TDRA configuration. The TDRA configuration is similar to the above second configuration information, and the TDRA configuration (a first information) includes information of at least one fourth duration and/or information of at least fourth offset of the second time-domain resources. The information of fourth offset may correspond to the above K0 configuration, and refers to an offset between the starting position of the second time-domain resources and an ending position of the PDCCH carrying the second DCI; however, the embodiments of this disclosure are not limited thereto. For example, the fourth offset may be an offset between a starting position of a second time-domain resource to which a state corresponds and an ending position of a second time-domain resource to which a state preceding the state corresponds, and information of the fourth duration may correspond to the above SLIV configuration.

In some embodiments, a TDRA configuration may include information of at least one fourth duration and/or information of at least one fourth offset of the second time-domain resources. The above fourth duration and/or fourth offset include(s) at least one time unit, wherein the first information indicates the fourth duration and/or fourth offset by indicating the number of the time units, and the at least one time unit is continuous in the time domain, or is discontinuous in the time domain. The time unit is, for example, a subframe, a slot, a symbol, a mini-slot, and a millisecond, etc., that is, the fourth duration includes a millisecond-level duration and/or a slot-level duration and/or a symbol-level duration, the fourth offset includes a millisecond-level offset and/or a slot-level offset and/or a symbol-level offset, and (lengths of time units of) the second time-domain resources are related to the subcarrier spacings. The time units of the information of the at least one fourth duration are identical or different, and the time units of the information of the at least one fourth offset are identical or different. How to determine the second time-domain resources according to the subcarrier spacings shall be described later, and parts repeated with those in 'I' shall not be described herein any further.

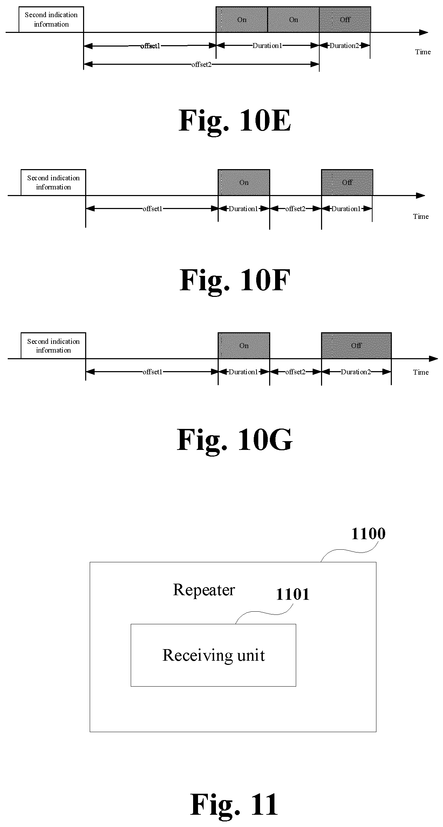

FIGs. 10A-10G are schematic diagrams of the second indication information of the embodiments of this disclosure. As shown in FIG. 10A, the indicated state is an on state, corresponding to a fourth offset and a fourth duration. As shown in FIG. 10B, the indicated states are an on state and an off state, corresponding to a fourth offset and a fourth duration, and a fourth duration of each state may be determined according to the implementation. As shown in FIG. 10C, the indicated states are an on state and an off state, corresponding to a fourth offset and two fourth durations, the two fourth durations corresponding respectively to the on state and the off state. As shown in FIG. 10D, the indicated states are an on state and an off state, corresponding to two fourth offsets and a fourth duration, the two fourth offsets corresponding to the on state and the off state, respectively, reference positions of the fourth offsets being identical, and fourth durations of the two states being identical. As shown in FIG. 10E, the indicated states are an on state and an off state, corresponding to two fourth offsets and two fourth durations, the two fourth offsets corresponding to the on state and the off state, respectively, and the two fourth durations corresponding to the on state and the off state, respectively. As shown in FIG. 10F, the indicated states are an on state and an off state, corresponding to two fourth offsets and a fourth duration, the two fourth offsets corresponding to the on state and the off state, respectively, and the on state and the off state corresponding to the same fourth duration. As shown in FIG. 10G, the indicated states are an on state and an off state, corresponding to two fourth offsets and two fourth durations, the two fourth offsets corresponding to the on state and the off state, respectively, and the two fourth durations corresponding to the on state and the off state, respectively. FIG. 10F and FIG. 10G differ from FIG. 10E in that a reference position of fourth offset 2 is different.

The second time-domain resources in FIGs. 10A-10G are continuous. However, this disclosure is not limited thereto, and they may also be discontinuous (for example, one state corresponds to information of multiple fourth offsets and/or multiple fourth duration, hence, discontinuous time-domain resources may be configured).

In some cases, the second time-domain resources to which different the on/off state(s) indicated by the second indication information correspond may overlap (partially or completely). For example, the received second RRC signaling includes multiple second configuration information (second indication information), and second time-domain resources to which the on/off state(s) indicated by different second indication information correspond may overlap. Hence, the method further includes: the repeater determines according to an instruction of the network device and/or a predefined method whether an overlapped a part in the second time-domain resource is in an on state or an off state.

In some embodiments, the repeater may determine whether the overlapped part in the second time-domain resource is in an on state or an off state according to the instruction of the network device.

For example, the second indication information may further include priority information and/or identification information and/or packet information, and the repeater uses a state indicated by second indication information with a corresponding highest priority and/or smallest identification, wherein the identification may be determined according to the identification information and/or packet information.

What described above is an example only, and the priority information and/or the identification information and/or the packet information may not be included in the second indication information, but may be included in the fourth indication information separately transmitted by the network device, and the embodiments of this disclosure are not limited thereto.

In some embodiments, the repeater may determine whether the overlapped part in the second time-domain resource is in an on state or an off state according to a predefined rule.

For example, only if one second indication information in the multiple second indication information causing the above overlapping indicates an on state, the forwarding unit is in the on state.

For another example, if the multiple second indication information (second configuration information) causing the above overlapping are included in the same list (the same configuration list), the repeater determines which indication to follow according to positions/an order of the second indication information in the list. For example, if multiple second indication information include first one of the second indication information in the list, a state indicated by the first one of the second indication information shall be followed, and if multiple second indication information include second one of the second indication information in the list and do not include the first one of the second indication information in the list, a state indicated by the second one of the second indication information shall be followed, and so on.

### (III) Related to the third indication information

In some embodiments, the backhaul link beam may also be referred to as a network device side beam, which refers to a receiving beam/transmitting beam used by the repeater in a BH link, wherein a beam (of an antenna) refers to a main lobe of a radiation pattern of an antenna array. Implementation of the beam is similar to that of the AC link beam, and reference may be made to (I) for details.

In some embodiments, the third indication information includes backhaul link beam indication information, and/or identification information, and/or packet information, and/or priority information, and/or first information for indicating third time-domain resources to which the backhaul link beam corresponds.

In some embodiments, the third indication information is carried by third RRC signaling or at least one of the third MAC signaling and third PHY signaling, wherein the third PHY signaling may be third DCI, such as unicast DCI or group common DCI. On the other hand, a format of the third DCI may be a legacy DCI format (such as 1_1, 2_0) or a newly-introduced DCI format. The third RRC signaling, third MAC signaling or third PHY signaling are identical to or different from the above first RRC signaling, first MAC signaling or first PHY signaling, second RRC signaling, second MAC signaling or second PHY signaling.

The information in the third indication information and implementations of carrying it are similar to those of the first indication information, and shall not be enumerated herein any further.

For example, when the third time-domain resource is periodic or semi-persistent, the first information includes information for indicating third time-domain resources in a period and/or period information, the information for indicating third time-domain resources in a period including information of at least one fifth time duration and/or fifth offset of the third time-domain resources.

For example, when the third time-domain resources are aperiodic, the first information includes information of at least one sixth duration and/or an information of at least one sixth offset indicating the third time-domain resources.

In some embodiments, the above period and/or fifth duration and/or fifth offset and/or sixth duration and/or sixth offset include(s) at least one time unit, and the first information indicates the above period and/or fifth duration and/or fifth offset and/or sixth duration and/or sixth offset by indicating the number of the time units, wherein the at least one time unit is continuous in the time domain, or is discontinuous in the time domain. The time unit is, for example, a subframe, a slot, a symbol, a mini-slot, and a millisecond, etc., that is, the fifth duration and/or sixth duration include(s) a millisecond-level duration and/or a slot-level duration and/or a symbol-level duration, the fifth offset and/or sixth offset include(s) a millisecond-level offset and/or a slot-level offset and/or a symbol-level offset, and (lengths of time units of) the third time-domain resources are related to the subcarrier spacings.

### (IV) Related to the subcarrier spacings

In the above embodiments, the time units of the first duration and/or period and/or second duration to which the first time-domain resources correspond are related to a first subcarrier spacing, the time units of the first offset and/or the second offset to which the first time-domain resources correspond are related to a second subcarrier spacing, the time units of the third duration and/or period and/or the fourth duration to which the second time-domain resources correspond are related to a third subcarrier spacing, the time units of the third offset and/or the fourth offset to which the second time-domain resources correspond are related to a fourth subcarrier spacing, the time units of the fifth duration and/or period and/or the sixth duration to which the third time-domain resources correspond are related to a fifth subcarrier spacing, and the time unit of the fifth offset and/or sixth offset to which the third time-domain resources correspond are related to a sixth subcarrier spacing.

In some embodiments, the repeater determines the time-domain resources according to the subcarrier spacings, wherein the first subcarrier spacing and/or the second subcarrier spacing is/are used to determine the first time-domain resources, the third subcarrier spacing and/or the fourth subcarrier spacing is/are used to determine the second time-domain resources, and the fifth subcarrier spacing and/or the sixth subcarrier spacing is/are used to determine the third time-domain resources.

In some embodiments, in order for the repeater to determine the above time-domain resources, the repeater needs to determine a subcarrier spacing on which the time units of the time-domain resources are based, the subcarrier spacing (including the first subcarrier spacing and/or the second subcarrier spacing and/or the third subcarrier spacing and/or the fourth subcarrier spacing and/or the fifth subcarrier spacing and/or the sixth subcarrier spacing) is predefined, or is indicated by the second information transmitted by the network device. The first subcarrier spacing and/or the second subcarrier spacing and/or the third subcarrier spacing and/or the fourth subcarrier spacing and/or the fifth subcarrier spacing and/or the sixth subcarrier spacing are identical or different.

In some embodiments, the first subcarrier spacing and/or the second subcarrier spacing and/or the third subcarrier spacing and/or the fourth subcarrier spacing and/or the fifth subcarrier spacing and/or the sixth subcarrier spacing are determined according to communication standard definition rules, including: the first subcarrier spacing and/or the second subcarrier spacing and/or the third subcarrier spacing and/or the fourth subcarrier spacing and/or the fifth subcarrier spacing and/or the sixth subcarrier spacing are fixed, or are reference subcarrier spacings of TDD configurations, or subcarrier spacings of an uplink/downlink activated BWP(s) of the repeater, or subcarrier spacing of the PDSCH/PDCCH carrying all or a part of information in the above indication information, or subcarrier spacing of PUCCHs carrying HARQ feedback of the PDSCH/PDCCH carrying all or a part of information in the above indication information, or a maximum value or minimum value of subcarrier spacings of an uplink/downlink configured BWP(s) of the repeater, or a maximum value or minimum value of subcarrier spacings of SSBs, or a maximum value or minimum value of subcarrier spacings of PRACHs, or a maximum value or minimum value of subcarrier spacings of uplink/downlink carriers, or a maximum value or minimum value of at least two of the above subcarrier spacings.

In some embodiments, the reference subcarrier spacings of the TDD configurations are for example, predefined or are configured by higher-layer signaling. The TDD configurations include, for example, a semi-static TDD configuration and/or a dynamic TDD configuration. For example, the semi-static TDD configuration is provided by the network device via cell-level/user-specific-level higher-layer signaling (such as tdd-UL-DL-ConfigurationCommon or tdd-UL-DL-ConfigurationDedicated). For another example, the dynamic TDD configuration is provided by SFI/DCI format 2_0 (DCI format 2_0 includes an SFI). A time unit (e.g. a symbol, a slot, a subframe) may be configured as being uplink, or downlink, or flexible. If a time unit is semi-statically configured as being uplink, it is unable to be rewritten as being downlink or flexible by SFI/DCI format 2_0 (even if SFI/DCI format 2_0 indicates that the time unit is downlink or flexible, it is invalid). Likewise, if a time unit is semi-statically configured as being downlink, it is unable to be rewritten as being uplink or flexible by SFI/DCI format 2_0 (even if SFI/DCI format 2_0 indicates that the time unit is uplink or flexible, it is invalid). If a time unit is configured as being flexible by the above higher-layer signaling or is not configured by the above higher-layer signaling as being uplink or downlink (flexible by default), SFI/DCI format 2_0 may configure the time unit as being uplink, or downlink, or flexible.

In some embodiments, the reference subcarrier spacing of the TDD configurations includes a reference subcarrier spacing of a semi-static TDD configuration and/or a reference subcarrier spacing of a dynamic TDD configuration. The subcarrier spacings of the semi-static TDD configuration and dynamic TDD configuration are identical or different. The subcarrier spacings of the semi-static TDD configuration and dynamic TDD configuration are configured by different higher-layer signaling, such as different RRC IEs/fields.

In some embodiments, the subcarrier spacing of the TDD configurations includes a subcarrier spacing for a downlink and/or a subcarrier spacing for an uplink. For example, for FDD, in a case where the mobile termination does not support simultaneously receiving downlink signals at a downlink carrier of an FDD frequency band and transmitting uplink signals at an uplink carrier of the FDD frequency band, the above TDD configurations are also applicable (however, it is not limited thereto), and the above higher-layer signaling and/or SFI/DCI format 2_0 is/are used to instruct the mobile termination to receive downlink signals at the downlink carrier or transmit uplink signals at the uplink carrier within a time unit. At this time, the reference subcarrier spacings for the downlink and uplink are identical or different.

In some embodiments, the above first subcarrier spacing and/or the second subcarrier spacing and/or the third subcarrier spacing and/or the fourth subcarrier spacing and/or the fifth subcarrier spacing and/or the sixth subcarrier spacing are the reference subcarrier spacings of the TDD configurations (that is, they are identical to the reference subcarrier spacings of the TDD configurations), and for indication information carried by different signaling (or, in other words, beams/on-off configurations of different time-domain characteristics), corresponding reference subcarrier spacings of the TDD configurations are different. For example, for the first indication information carried only by RRC signaling (or, in other words, a semi-static access link beam configuration), the first subcarrier spacing and/or the second subcarrier spacing is/are a reference subcarrier spacing(s) of the semi-static TDD configuration. For another example, for the first indication information carried by DCI (or, in other words, a dynamic access link beam configuration), the first subcarrier spacing and/or the second subcarrier spacing is/are a reference subcarrier spacing(s) of the dynamic TDD configuration; or, for example, for the second indication information carried only by RRC signaling (or, in other words, a semi-static on/off configuration), the third subcarrier spacing and/or the fourth subcarrier spacing is/are a reference subcarrier spacing(s) of the semi-static TDD configuration. For a further example, for the second indication information carried by DCI (or, in other words, a dynamic on/off configuration), the third subcarrier spacing and/or the fourth subcarrier spacing is/are a reference subcarrier spacing(s) of the dynamic TDD configuration; or, for example, for the third indication information carried only by RRC signaling (or, in other words, semi-static backhaul link beam configuration), the fifth subcarrier spacing and/or the sixth subcarrier spacing is/are a reference subcarrier spacing(s) of the semi-static TDD configuration. For still another example, for the third indication information carried by DCI (or, in other words, dynamic backhaul link beam configuration), the fifth subcarrier spacing and/or the sixth subcarrier spacing is/are a reference subcarrier spacing(s) of the dynamic TDD configuration.

In some embodiments, the first subcarrier spacing and/or the second subcarrier spacing and/or the third subcarrier spacing and/or the fourth subcarrier spacing and/or the fifth subcarrier spacing and/or the sixth subcarrier spacing is/are indicated by the second information transmitted by the network device, the second information including one or more subcarrier spacing indication information, the one or more subcarrier spacing indication information being used to indicate the first subcarrier spacing and/or the second subcarrier spacing and/or the third subcarrier spacing and/or the fourth subcarrier spacing and/or the fifth subcarrier spacing and/or the sixth subcarrier spacing.

In some embodiments, for the first subcarrier spacing and/or the second subcarrier spacing, one first subcarrier spacing indication information and/or one second subcarrier spacing indication information correspond(s) to one beam or multiple beams, or correspond to one first indication information (access link beam indication information) or multiple first indication information (access link beam indication information).

For example, one first subcarrier spacing indication information and/or one second subcarrier spacing indication information is/are applied to one access link indication information (or one first indication information), wherein one access link indication information (or on first indication information) indicates one or more beams, all the one or more beams being applied to one first subcarrier spacing indication information and/or one second subcarrier spacing indication information. That is, the first duration and/or second duration of the first time-domain resources to which the one or more beams correspond applies/apply the same first subcarrier spacing indication information, and the first offset and/or second offset of the first time-domain resources to which the one or more beams correspond applies/apply the same second subcarrier spacing indication information, wherein the first subcarrier spacing indication information and/or the second subcarrier spacing indication information may be included in the first RRC signaling and/or the first MAC signaling and/or the first PHY signaling, or may be included in the first indication information (access link beam indication information) in the first RRC signaling and/or the first MAC signaling and/or the first PHY signaling, or may be included in fourth RRC signaling and/or fourth MAC signaling and/or fourth PHY signaling different from the first RRC signaling and/or the first MAC signaling and/or the first PHY signaling. For example, each first indication information (access link beam indication information) includes a first subcarrier spacing indication information and/or a second subcarrier spacing indication information, or the first RRC signaling and/or the first MAC signaling and/or the first PHY signaling include(s) multiple (N) first subcarrier spacing indication information and/or multiple (N) second subcarrier spacing indication information, corresponding respectively to multiple (N) first indication information (access link beam indication information) in the first RRC signaling and/or the first MAC signaling and/or the first PHY signaling.

For example, one first subcarrier spacing indication information and/or one second subcarrier spacing indication information is/are applied to an access link beam, wherein one access link indication information (or one first indication information) indicates multiple beams, the multiple beams applying different first subcarrier spacing indication information and/or different second subcarrier spacing indication information. That is, the first duration and/or second duration of the first time-domain resources to which the multiple beams correspond applies/apply different first subcarrier spacing indication information, and the first offset and/or second offset of the first time-domain resources to which the multiple beams correspond applies/apply different second subcarrier spacing indication information, wherein the different first subcarrier spacing indication information and/or the different second subcarrier spacing indication information may be included in the first RRC signaling and/or the first MAC signaling and/or the first PHY signaling, or may be included in the first indication information (access link beam indication information) in the first RRC signaling and/or the first MAC signaling and/or the first PHY signaling, or may be included in the fourth RRC signaling and/or the fourth MAC signaling and/or the fourth PHY signaling different from the first RRC signaling and/or the first MAC signaling and/or the first PHY signaling. For example, each first indication information (access link beam indication information) includes multiple first subcarrier spacing indication information and/or multiple second subcarrier spacing indication information, or the first RRC signaling and/or the first MAC signaling and/or the first PHY signaling include(s) multiple first subcarrier spacing indication information and/or multiple second subcarrier spacing indication information, corresponding respectively to the multiple beams indicated by the first indication information (access link beam indication information) in the first RRC signaling and/or the first MAC signaling and/or the first PHY signaling.

For example, one first subcarrier spacing indication information and/or one second subcarrier spacing indication information is/are applied to one or more access link beam indication information (first indication information), wherein one access link indication information (or one first indication information) indicates one or more beams, and the one or more access link beam indication information (first indication information) applies/apply one first subcarrier spacing indication information and/or one second subcarrier spacing indication information, that is, the first duration and/or the second duration of the first time-domain resources to which the multiple beams indicated by the multiple first indication information in the first RRC signaling and/or the first MAC signaling and/or the first PHY signaling correspond applies/apply the same first subcarrier spacing indication information, and the first offset and/or second offset of the first time-domain resources to which the multiple beams indicated by the multiple first indication information in the first RRC signaling and/or the first MAC signaling and/or the first PHY signaling correspond applies/apply the same second subcarrier spacing indication information, wherein the first subcarrier spacing indication information and/or the second subcarrier spacing indication information may be included in the first RRC signaling and/or the first MAC signaling and/or the first PHY signaling, or may be included in the fourth RRC signaling and/or the fourth MAC signaling and/or the fourth PHY signaling different from the first RRC signaling and/or the first MAC signaling and/or the first PHY signaling. For example, the first (fourth) RRC signaling and/or the first (fourth) MAC signaling and/or the first (fourth) PHY signaling include(s) one first subcarrier spacing indication information and/or one second subcarrier spacing indication information, and the first indication information (access link beam indication information) based on the first RRC signaling and/or the first MAC signaling and/or the first PHY signaling indication applies the first subcarrier spacing indication information and/or the second subcarrier spacing indication information.

In some embodiments, for the third subcarrier spacing and/or the fourth subcarrier spacing, one third subcarrier spacing indication information and/or one fourth subcarrier spacing indication information correspond(s) to the on/off state(s), or correspond(s) to one second indication information or correspond to multiple second indication information.

For example, one third subcarrier spacing indication information and/or one fourth subcarrier spacing indication information is/are applied to one state, wherein multiple second indication information indicate an on/off state(s), the on state corresponding to one third subcarrier spacing indication information and/or one fourth subcarrier spacing indication information, and the off state corresponding to one third subcarrier spacing indication information and/or one fourth subcarrier spacing indication information, that is, the third duration and/or the fourth duration of the second time-domain resources to which the on state corresponds applies/apply one third subcarrier spacing indication information, and the third duration and/or the fourth duration of the second time-domain resources to which the off state corresponds applies/apply another third subcarrier spacing indication information, the third offset and/or the fourth offset of the second time-domain resources to which the off state corresponds applies/apply one fourth subcarrier spacing indication information, and the third offset and/or the fourth offset of the second time-domain resources to which the on state corresponds applies/apply another fourth subcarrier spacing indication information, wherein the third subcarrier spacing indication information and/or the fourth subcarrier spacing indication information may be included in the second RRC signaling and/or the second MAC signaling and/or the second PHY signaling, or may be included in the fourth RRC signaling and/or the fourth MAC signaling and/or the fourth PHY signaling different from the second RRC signaling and/or the second MAC signaling and/or the second PHY signaling. For example, the second (fourth) RRC signaling and/or the second (fourth) MAC signaling and/or the second (fourth) PHY signaling include(s) two third subcarrier spacing indication information and/or two fourth subcarrier spacing indication information, and based on the second time-domain resources corresponding to the on state and the off state indicated by the second indication information indicated by the second RRC signaling and/or the second MAC signaling and/or the second PHY signaling, the two different third subcarrier spacing indication information are respectively applied, or the two different fourth subcarrier spacing indication information are respectively applied.

For example, one third subcarrier spacing indication information and/or one fourth subcarrier spacing indication information is/are applied to one second indication information, wherein one second indication information indicates an on/off state(s), and different second indication information apply different third subcarrier spacing indication information and/or different fourth subcarrier spacing indication information, that is, the third duration and/or fourth duration of the second time-domain resources corresponding to the on/off state(s) indicated by one second indication information indicate applies/apply one third subcarrier spacing indication information, and the third offset and/or fourth offset of the second time-domain resources corresponding to the on/off state(s) indicated by one second indication information indicate applies/apply one fourth subcarrier spacing indication information, wherein the third subcarrier spacing indication information and/or the fourth subcarrier spacing indication information may be included in the second RRC signaling and/or the second MAC signaling and/or the second PHY signaling, or may be included in the second indication information in the second RRC signaling and/or the second MAC signaling and/or the second PHY signaling, or may be included in the fourth RRC signaling and/or the fourth MAC signaling and/or the fourth PHY signaling different from the second RRC signaling and/or the second MAC signaling and/or the second PHY signaling. For example, each second indication information includes a third subcarrier spacing indication information and/or a fourth subcarrier spacing indication information, or the second RRC signaling and/or the second MAC signaling and/or the second PHY signaling include(s) multiple third subcarrier spacing indication information and/or multiple fourth subcarrier spacing indication information, corresponding respectively to multiple second indication information in the second RRC signaling and/or the second MAC signaling and/or the second PHY signaling.

For example, a third subcarrier spacing indication information and/or a fourth subcarrier spacing indication information is/are applied to one or more second indication information, wherein multiple second indication information all apply a third subcarrier spacing indication information and/or a fourth subcarrier spacing indication information, that is, the third duration and/or fourth duration of the second time-domain resources corresponding to the on/off state(s) indicated by multiple second indication information in the second RRC signaling and/or second MAC signaling and/or second PHY signaling applies/apply the same third subcarrier spacing indication information, and the third offset and/or the fourth offset of the second time-domain resources corresponding to the on/off state(s) indicated by multiple second indication information in the second RRC signaling and/or the second MAC signaling and/or the second PHY signaling applies/apply the same fourth subcarrier spacing indication information, wherein the third subcarrier spacing indication information and/or the fourth subcarrier spacing indication information may be included in the second RRC signaling and/or the second MAC signaling and/or the second PHY signaling, or may be included in the fourth RRC signaling and/or the fourth MAC signaling and/or the fourth PHY signaling different from the second RRC signaling and/or the second MAC signaling and/or the second PHY signaling. For example, the second (fourth) RRC signaling and/or the second (fourth) MAC signaling and/or the second (fourth) PHY signaling include(s) a third subcarrier spacing indication information and/or a fourth subcarrier spacing indication information, and the second indication information indicated based on the second RRC signaling and/or the second MAC signaling and/or the second PHY signaling applies the third subcarrier spacing indication information and/or the fourth subcarrier spacing indication information.

In some embodiments, a mode/modes for indicating the fifth subcarrier spacing and/or the sixth subcarrier spacing is/are similar to that/those of the first subcarrier spacing and/or the second subcarrier spacing, and shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, the repeater may be controlled by the network device, so that (time-domain resources corresponding to) the beams when the repeater performs forwarding are able to match (time-domain resources corresponding to) the beams receiving the forwarded signals, or that the time-domain resources to which the on state of the forwarding unit match the time-domain resources of the data transmission between the network device and the terminal equipment, thereby increasing an effect of amplifying/enhancing signals, saving power consumption of the repeater, and at the same time, reducing interference to other devices in the network, and improving network throughput.

### Embodiments of a second aspect

The embodiments of this disclosure provide a repeater. The repeater may be, for example, the NCR as described above, or a network device or terminal equipment having a function of forwarding, or one or some components or assemblies configured in the NCR or the network device or the terminal equipment.

FIG. 11 is a schematic diagram of the repeater of the embodiments of this disclosure. As a principle of the repeater for solving problems is similar to that of the method in the embodiments of the first aspect, reference may be made to the implementation of the method described in the embodiments of the first aspect for implementation of the repeater, with identical or related contents being not going to be described herein any further.

As shown in FIG. 11, a repeater 1100 includes:
a receiving unit 1101 configured to receive indication information for controlling a forwarding unit of the repeater in a mobile termination of the repeater, the indication information including first information for indicating time-domain resources, the time-domain resources being related to subcarrier spacings.

Reference may be made to 401 for implementation of the receiving unit 1101, which shall not be described herein any further.

In some embodiments, the repeater further includes:
a determining unit (not shown) configured to determine the time-domain resources according to the subcarrier spacings.

In some embodiments, the subcarrier spacings are predefined, or are indicated by second information transmitted by a network device.

Reference may be made to the embodiments of the first aspect for implementations of the indication information, the first information, the time-domain resources and the subcarrier spacings, which shall not be described herein any further.

Furthermore, for the sake of simplicity, connection relationships between the components or modules or signal profiles thereof are only illustrated in FIG. 11. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, the repeater may be controlled by the network device, so that (time-domain resources corresponding to) the beams when the repeater performs forwarding are able to match (time-domain resources corresponding to) the beams receiving the forwarded signals, or that the time-domain resources to which the on state of the forwarding unit match the time-domain resources of the data transmission between the network device and the terminal equipment, thereby increasing an effect of amplifying/enhancing signals, saving power consumption of the repeater, and at the same time, reducing interference to other devices in the network, and improving network throughput.

### Embodiments of a third aspect

The embodiments of this disclosure provide an information indication method, which shall be described from a side of a network device, with contents identical to those in the embodiments of the first aspect being not going to be described herein any further.

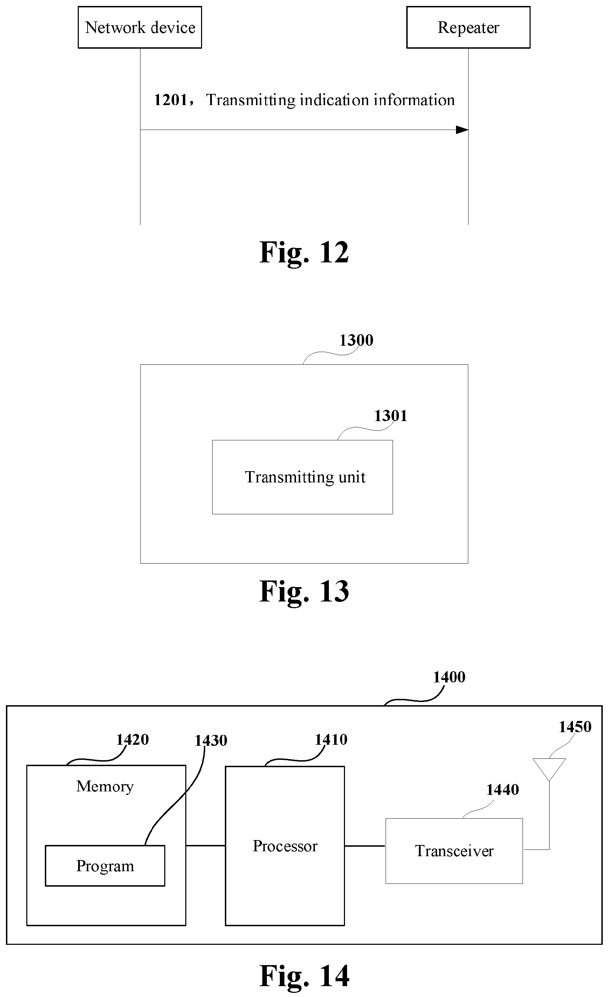

FIG. 12 is a schematic diagram of the information indication method of the embodiments of this disclosure. As shown in FIG. 12, the method includes:
1201: a network device transmits indication information for controlling a forwarding unit of a repeater to a mobile termination of the repeater, the indication information including first information for indicating time-domain resources, the time-domain resources being related to subcarrier spacings.

Reference may be made to 401 for implementation of 1201, and reference may be made to the embodiments of the first aspect for implementations of the indication information, the first information, the time-domain resources and the subcarrier spacings, which shall not be described herein any further.

It should be noted that FIG. 12 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 12.

The steps or processes related to this disclosure are only described above; however, this disclosure is not limited thereto. The method of the embodiments of this disclosure may also include other steps or processes, and reference may be made to relevant techniques for specific contents of these steps or processes.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, the repeater may be controlled by the network device, so that (time-domain resources corresponding to) the beams when the repeater performs forwarding are able to match (time-domain resources corresponding to) the beams receiving the forwarded signals, or that the time-domain resources to which the on state of the forwarding unit match the time-domain resources of the data transmission between the network device and the terminal equipment, thereby increasing an effect of amplifying/enhancing signals, saving power consumption of the repeater, and at the same time, reducing interference to other devices in the network, and improving network throughput.

### Embodiments of a fourth aspect

The embodiments of this disclosure provide a network device.

FIG. 13 is a schematic diagram of the network device of the embodiments of this disclosure. As a principle of the network device for solving problems is similar to that of the method in the embodiments of the third aspect, reference may be made to the implementation of the method described in the embodiments of the third aspect for implementation of the network device, with identical or related contents being not going to be described herein any further.

As shown in FIG. 13, a network device 1300 of the embodiments of this disclosure includes:
a transmitting unit 1301 configured to transmit indication information for controlling a forwarding unit of a repeater to a mobile termination of the repeater, the indication information including first information for indicating time-domain resources, the time-domain resources being related to subcarrier spacings.

Reference may be made to 1201 for implementation of the transmitting unit 1301, which shall not be described herein any further.

It should be noted that the components or modules related to this disclosure are only described above. However, this disclosure is not limited thereto, and the network device 1300 of the embodiments of this disclosure may further include other components or modules, and reference may be made to related techniques for particulars of these components or modules.

Furthermore, for the sake of simplicity, connection relationships between the components or modules or signal profiles thereof are only illustrated in FIG. 13. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, the repeater may be controlled by the network device, so that (time-domain resources corresponding to) the beams when the repeater performs forwarding are able to match (time-domain resources corresponding to) the beams receiving the forwarded signals, or that the time-domain resources to which the on state of the forwarding unit match the time-domain resources of the data transmission between the network device and the terminal equipment, thereby increasing an effect of amplifying/enhancing signals, saving power consumption of the repeater, and at the same time, reducing interference to other devices in the network, and improving network throughput.

### Embodiments of a fifth aspect

The embodiments of this disclosure provide a communication system. FIG. 1 is a schematic diagram of the communication system of the embodiments of this disclosure. As shown in FIG. 1, the communication system 100 includes a network device 101, a repeater 102 and a terminal equipment 103. For the sake of simplicity, description is given in FIG. 1 by taking one network device, one repeater and one terminal equipment only as an example; however, the embodiments of this disclosure are not limited thereto.

In the embodiments of this disclosure, existing traffics or traffics that may be implemented in the future may be performed between the network device 101 and the terminal equipment 103. For example, such traffics may include but not limited to enhanced mobile broadband (eMBB), massive machine type communication (mMTC), ultra-reliable and low-latency communication (URLLC), and vehicle to everything (V2X) communication, etc. The repeater 102 is configured to execute the information indication method in the embodiments of the first aspect, and the network device 101 is configured to execute the information indication method in the embodiments of the third aspect, contents of which being incorporated herein, which shall not be repeated herein any further.

The embodiments of this disclosure further provide an electronic device, which may be, for example, a repeater or a network device.

FIG. 14 is a schematic diagram of a structure of the electronic device of the embodiments of this disclosure. As shown in FIG. 14, an electronic device 1400 may include a processor 1410 (such as a central processing unit (CPU)) and a memory 1420, the memory 1420 being coupled to the processor 1410. The memory 1420 may store various data, and furthermore, it may store a program 1430 for information processing, and execute the program 1430 under control of the processor 1410.

For example, the processor 1410 may be configured to execute a program to execute the information indication method described in the embodiments of the first aspect.

For another example, the processor 1410 may be configured to execute a program to execute the information indication method described in the embodiments of the third aspect.

Furthermore, as shown in FIG. 14, the electronic device 1400 may include a transceiver 1440, and an antenna 1450, etc. Functions of the above components are similar to those in the related art, and shall not be described herein any further. It should be noted that the electronic device 1400 does not necessarily include all the parts shown in FIG. 14, and furthermore, the electronic device 1400 may include parts not shown in FIG. 14, and the related art may be referred to.

Embodiment of this disclosure provide a computer readable program, when executed in a repeater, causes a computer to carry out the information indication method described in the embodiments of the first aspect in the repeater.

Embodiment of this disclosure provide a computer storage medium, including a computer readable program, which causes a computer to carry out the information indication method as described in the embodiments of the first aspect in a repeater.

Embodiment of this disclosure provide a computer readable program, when executed in a network device, causes a computer to carry out the information indication method described in the embodiments of the third aspect in the network device.

Embodiment of this disclosure provide a computer storage medium, including a computer readable program, which causes a computer to carry out the information indication method as described in the embodiments of the third aspect in a network device.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile termination, and may also be stored in a memory card of a pluggable mobile termination. For example, if equipment (such as a mobile termination) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

As to implementations containing the above embodiments, following supplements are further disclosed.
1. An information indication method, applicable to a repeater, characterized in that the method includes:
   receiving, by a mobile termination of the repeater, indication information for controlling a forwarding unit of the repeater, the indication information including first information for indicating time-domain resources, the time-domain resources being related to subcarrier spacings.
2. The method according to supplement 1, wherein the repeater determines the time-domain resources according to the subcarrier spacings.
3. The method according to supplement 1 or 2, wherein the subcarrier spacings are predefined, or are indicated by second information transmitted by a network device.
4. The method according to supplement 1, wherein the indication information includes first indication information for controlling an access link beam of the repeater, or second indication information for controlling on/off state of the forwarding unit of the repeater, or third indication information for controlling a backhaul link beam of the repeater.
5. The method according to supplement 4, wherein the first indication information includes access link beam indication information, and/or identification information, and/or packet information, and/or priority information, and/or first information for indicating a first time-domain resource to which an access link beam corresponds.
6. The method according to supplement 5, wherein the first time-domain resource is periodic, or semi-persistent, or aperiodic.
7. The method according to supplement 4 or 5 or 6, wherein the first indication information is carried by first RRC signaling and/or first MAC signaling and/or first PHY signaling.
8. The method according to supplement 7, wherein the first RRC signaling includes one or more first configuration information, the first configuration information including all or a part of information in the first indication information.
9. The method according to supplement 8, wherein the first MAC signaling and/or the first PHY signaling is/are used to activate and/or deactivate one or more first configurations in the multiple first configuration information.
10. The method according to supplement 7, wherein the first MAC signaling includes one or more first configuration information, the first configuration information including all or a part information in the first indication information.
11. The method according to supplement 10, wherein the first PHY signaling is used to activate and/or deactivate one or more first configurations in the multiple first configuration information.
12. The method according to supplement 7 or 9 or 11, wherein the first MAC signaling and/or the first PHY signaling further include(s) identification information for indicating one or more first configurations in the multiple first configuration information and/or a part of information in the first indication information.
13. The method according to any one of supplements 8-12, wherein the first configuration information includes all or a part of information in the first information indicating the first time-domain resource, the first time-domain resource being periodic or semi-persistent.
14. The method according to supplement 13, the first information includes information for indicating first time-domain resources in a period and/or period information.
15. The method according to supplement 13 or 14, wherein the first MAC signaling and/or the first PHY signaling include(s) a part of information in the first information.
16. The method according to supplement 15, wherein the part of information of the first information included in the first configuration information includes period information, and the part of information of the first information included in the first MAC signaling and/or the first PHY signaling includes information for indicating first time-domain resources within one period.
17. The method according to supplement 14, wherein the information for indicating the first time-domain resources in a period includes information of at least one first duration and/or information of at least one first offset.
18. The method according to supplement 17, wherein the first duration includes a millisecond-level duration and/or a slot-level duration and/or a symbol-level duration.
19. The method according to supplement 17, wherein the first offset includes a millisecond-level offset and/or a slot-level offset and/or a symbol-level offset.
20. The method according to supplement 5, wherein when first time-domain resources corresponding to at least two beams indicated by different first indication information overlap, the repeater determines a beam to be forwarded according to the identification information and/or the priority information and/or the packet information.
21. The method according to supplement 7 or 15, wherein the first PHY signaling includes one or more first information fields, at least one first information field being used to indicate the first time-domain resource.
22. The method according to supplement 21, wherein the first information field includes a time-domain resource allocation information field.
23. The method according to supplement 22, wherein TDRA tables corresponding to different time-domain resource allocation information fields are identical or different.
24. The method according to supplement 21, wherein the one or more first information fields are used to indicate information of at least one second duration and/or information of at least one second offset.
25. The method according to supplement 24, wherein the second duration includes a millisecond-level duration and/or a slot-level duration and/or a symbol-level duration.
26. The method according to supplement 24, wherein the second offset includes a millisecond-level offset and/or a slot-level offset and/or a symbol-level offset.
27. The method according to supplement 4, wherein the first indication information includes the second indication information.
28. The method according to supplement 4, wherein the second indication information includes the first indication information and/or information indicating uplink and downlink directions.
29. The method according to supplement 28, wherein the forwarding unit is in an on state on a first time-domain resource indicated by the first information in the first indication information, and/or the forwarding unit is in an off state on a flexible time-domain resource indicated by the information indicating uplink and downlink directions, and/or the forwarding unit is in an off state on a time-domain resource of the first time-domain resource indicated as a flexible time-domain resource by the information indicating uplink and downlink directions.
30. The method according to any one of supplements 4 and 27-29, wherein the second indication information includes third information for indicating an on/off state(s), and/or first information for indicating a second time-domain resource to which an on/off state(s) correspond(s).
31. The method according to supplement 4, wherein the second indication information includes third information for indicating an on/off state(s) and the first indication information.
32. The method according to supplement 31, wherein the second indication information further includes identification information, and/or packet information, and/or priority information.
33. The method according to supplement 30, wherein the second time-domain resource is periodic, or semi-persistent, or aperiodic.
34. The method according to supplement 30 or 33, wherein the second indication information is carried by second RRC signaling and/or second MAC signaling and/or second PHY signaling.
35. The method according to supplement 34, wherein the second RRC signaling includes one or more second configuration information, the second configuration information including all or a part of information in the second indication information.
36. The method according to supplement 35, wherein the second MAC signaling and/or the second PHY signaling is/are used to activate and/or deactivate one or more second configurations in the multiple second configuration information.
37. The method according to supplement 34, the second MAC signaling includes one or more second configuration information, the second configuration information including all or a part of information in the second indication information.
38. The method according to supplement 37, wherein the second PHY signaling is used to activate and/or deactivate one or more second configurations in the multiple second configuration information.
39. The method according to supplement 34 or 37 or 38, wherein the second MAC signaling and/or the second PHY signaling further include(s) identification information for indicating one or more second configurations in the multiple second configuration information and/or a part of information in the second indication information.
40. The method according to any one of supplements 35-39, wherein the second configuration information includes all or a part of information in the first information indicating the second time-domain resource, and the second time-domain resource is periodic or semi-persistent.
41. The method according to supplement 40, wherein the first information includes information indicating second time-domain resources in a period and/or period information.
42. The method according to supplement 40 or 41, wherein the second MAC signaling and/or the second PHY signaling include(s) a part of the information in the first information.
43. The method according to supplement 40, wherein the part of information in the first information included in the second configuration information includes period information, and the part of information in the first information included in the second MAC signaling and/or the second PHY signaling includes information for indicating second time-domain resources in a period.
44. The method according to supplement 41, the information for indicating second time-domain resources in a period includes information of at least one third duration and/or information of at least one third offset.
45. The method according to supplement 44, wherein the third duration includes a millisecond-level duration and/or a slot-level duration and/or a symbol-level duration.
46. The method according to supplement 44, wherein the third offset includes a millisecond-level offset and/or a slot-level offset and/or a symbol-level offset.
47. The method according to supplement 31, when second time-domain resources corresponding to on/off states indicated by different second indication information overlap, the repeater determines that the forwarding unit on the overlapped second time-domain resources is in an on or off state according to the identification information and/or the priority information and/or the packet information.
48. The method according to supplement 34 or 42, wherein the second PHY signaling includes one or more second information fields, at least one second information field being used to indicate the second time-domain resource.
49. The method according to supplement 48, wherein the second information field includes a time-domain resource allocation information field.
50. The method according to supplement 49, wherein TDRA tables corresponding to different time-domain resource allocation information fields are identical or different.
51. The method according to supplement 48, wherein the one or more second information fields is/are used to indicate information of at least one fourth duration and/or information of at least one fourth offset.
52. The method according to supplement 51, wherein the fourth duration includes a millisecond-level duration and/or a slot-level duration and/or a symbol-level duration.
53. The method according to supplement 51, wherein the fourth offset includes a millisecond-level offset and/or a slot-level offset and/or a symbol-level offset.
54. The method according to supplement 4, wherein the third indication information includes backhaul link beam indication information, and/or identification information, and/or packet information, and/or priority information, and/or first information for indicating a third time-domain resource to which a backhaul link beam corresponds.
55. The method according to supplement 54, wherein the third time-domain resource is periodic, or semi-persistent, or aperiodic.
56. The method according to supplement 54 or 55, wherein the third indication information is carried by third RRC signaling and/or third MAC signaling and/or third PHY signaling.
57. The method according to supplement 54, wherein the first information includes information indicating third time-domain resources in a period and/or period information.
58. The method according to supplement 57, wherein the information for indicating third time-domain resources in a period includes information of at least one fifth duration and/or fifth offset.
59. The method according to supplement 54, wherein the first information includes information of at least one sixth duration and/or sixth offset.
60. The method according to supplement 58 or 59, wherein the fifth duration and/or the sixth duration include(s) a millisecond-level duration and/or a slot-level duration and/or a symbol-level duration.
61. The method according to supplement 58 or 59, wherein the fifth offset and/or the sixth offset include(s) a millisecond-level offset and/or a slot-level offset and/or a symbol-level offset.
62. The method according to any one of supplement 14, 24, 44, 51, 58 and 59, wherein a first subcarrier spacing and/or a second subcarrier spacing is/are used to determine the first time-domain resource, a third subcarrier spacing and/or a fourth subcarrier spacing is/are used to determine the second time-domain resource, and the fifth subcarrier spacing and/or the sixth subcarrier spacing is/are used to determine the third time-domain resource.
63. The method according to supplement 3 or 62, wherein the second information includes one or more subcarrier spacing indication information, the one or more subcarrier spacing indication information being used to indicate the first subcarrier spacing and/or the second subcarrier spacing and/or a third subcarrier spacing and/or a fourth subcarrier spacing and/or a fifth subcarrier spacing and/or a sixth subcarrier spacing.
64. The method according to supplement 63, wherein one subcarrier spacing indication information corresponds to one beam or multiple beams, or corresponds to one first indication information (access link beam indication information) or multiple first indication information (access link beam indication information), or corresponds to an on/off state(s), or corresponds to one second indication information or multiple second indication information, or corresponds to one third indication information or multiple third indication information.
65. The method according to supplement 7 or 34 or 56, wherein the second information is included in the first RRC signaling and/or the first MAC signaling and/or the first PHY signaling, or is included in the second RRC signaling and/or the second MAC signaling and/or the second PHY signaling, or is included in the third RRC signaling and/or the third MAC signaling and/or the third PHY signaling, or is included in the fourth RRC signaling and/or the fourth MAC signaling and/or the fourth PHY signaling.
66. The method according to supplement 3 or 62, wherein the first subcarrier spacing and/or the second subcarrier spacing and/or the third subcarrier spacing and/or the fourth subcarrier spacing and/or the fifth subcarrier spacing and/or the sixth subcarrier spacing is/are determined according to a communication standard definition rule, including that the first subcarrier spacing and/or the second subcarrier spacing and/or the third subcarrier spacing and/or the fourth subcarrier spacing and/or the fifth subcarrier spacing and/or the sixth subcarrier spacing is fixed, or is a reference subcarrier spacing of TDD configuration, or a subcarrier spacing of uplink/downlink activated BWP(s) of the repeater, or a subcarrier spacing of a PDSCH or PDCCH carrying all or a part of the information in the indication information, or a subcarrier spacing of a PUCCH/PUCCHs carrying HARQ feedback of a PDSCH or PDCCH carrying all or a part of the information in the indication information, or a maximum or minimum value of a subcarrier spacing of uplink/downlink configured BWP(s) of the repeater, or a maximum or minimum value of a subcarrier spacing of an SSB, or a maximum or minimum value of a subcarrier spacing of a PRACH, or a maximum or minimum value of a subcarrier spacing of a downlink and/or uplink carrier(s), or a maximum or minimum value of at least two of the above subcarrier spacings.
67. The method according to supplement 62, wherein the first subcarrier spacing and/or the second subcarrier spacing and/or the third subcarrier spacing and/or the fourth subcarrier spacing and/or the fifth subcarrier spacing and/or the sixth subcarrier spacing are identical or different.
68. An information indication method, applicable to a network device, characterized in that the method includes:
   transmitting indication information for controlling a forwarding unit of a repeater by the network device to a mobile termination of the repeater, the indication information including first information for indicating time-domain resources, the time-domain resources being related to subcarrier spacings.
69. A repeater, including a memory and a processor, the memory storing a computer program, and the processor being configured to execute the computer program to carry out the information indication method as described in any one of supplements 1-67.
70. A network device, including a memory and a processor, the memory storing a computer program, and the processor being configured to execute the information indication method as described in supplement 68.

The embodiments of this disclosure further disclose the following supplements.
1. A repeater, characterized in that the repeater includes:
   a receiving unit configured to receive indication information for controlling a forwarding unit of the repeater, the indication information including first information for indicating time-domain resources, the time-domain resources being related to subcarrier spacings.
2. The repeater according to supplement 1, wherein the repeater further includes:
   a determining unit configured to determine the time-domain resources according to the subcarrier spacings.
3. The repeater according to supplement 1 or 2, wherein the subcarrier spacings are predefined, or are indicated by second information transmitted by a network device.
4. The repeater according to supplement 1, wherein the indication information includes first indication information for controlling an access link beam of the repeater, or second indication information for controlling on/off state of the forwarding unit of the repeater, or third indication information for controlling a backhaul link beam of the repeater.
5. The repeater according to supplement 4, wherein the first indication information includes access link beam indication information, and/or identification information, and/or packet information, and/or priority information, and/or first information for indicating a first time-domain resource to which an access link beam corresponds.
6. The repeater according to supplement 5, wherein the first time-domain resource is periodic, or semi-persistent, or aperiodic.
7. The repeater according to supplement 4 or 5 or 6, wherein the first indication information is carried by first RRC signaling and/or first MAC signaling and/or first PHY signaling.
8. The repeater according to supplement 7, wherein the first RRC signaling includes one or more first configuration information, the first configuration information including all or a part of information in the first indication information.
9. The repeater according to supplement 8, wherein the first MAC signaling and/or the first PHY signaling is/are used to activate and/or deactivate one or more first configurations in the multiple first configuration information.
10. The repeater according to supplement 7, wherein the first MAC signaling includes one or more first configuration information, the first configuration information including all or a part information in the first indication information.
11. The repeater according to supplement 10, wherein the first PHY signaling is used to activate and/or deactivate one or more first configurations in the multiple first configuration information.
12. The repeater according to supplement 7 or 9 or 11, wherein the first MAC signaling and/or the first PHY signaling further include(s) identification information for indicating one or more first configurations in the multiple first configuration information and/or a part of information in the first indication information.
13. The repeater according to any one of supplements 8-12, wherein the first configuration information includes all or a part of information in the first information indicating the first time-domain resource, the first time-domain resource being periodic or semi-persistent.
14. The repeater according to supplement 13, the first information includes information for indicating first time-domain resources in a period and/or period information.
15. The repeater according to supplement 13 or 14, wherein the first MAC signaling and/or the first PHY signaling include(s) a part of information in the first information.
16. The repeater according to supplement 15, wherein the part of information of the first information included in the first configuration information includes period information, and the part of information of the first information included in the first MAC signaling and/or the first PHY signaling includes information for indicating first time-domain resources within one period.
17. The repeater according to supplement 14, wherein the information for indicating the first time-domain resources in a period includes information of at least one first duration and/or information of at least one first offset.
18. The repeater according to supplement 17, wherein the first duration includes a millisecond-level duration and/or a slot-level duration and/or a symbol-level duration.
19. The repeater according to supplement 17, wherein the first offset includes a millisecond-level offset and/or a slot-level offset and/or a symbol-level offset.
20. The repeater according to supplement 5, wherein when first time-domain resources corresponding to at least two beams indicated by different first indication information overlap, the repeater determines a beam to be forwarded according to the identification information and/or the priority information and/or the packet information.
21. The repeater according to supplement 7 or 15, wherein the first PHY signaling includes one or more first information fields, at least one first information field being used to indicate the first time-domain resource.
22. The repeater according to supplement 21, wherein the first information field includes a time-domain resource allocation information field.
23. The repeater according to supplement 22, wherein TDRA tables corresponding to different time-domain resource allocation information fields are identical or different.
24. The repeater according to supplement 21, wherein the one or more first information fields are used to indicate information of at least one second duration and/or information of at least one second offset.
25. The repeater according to supplement 24, wherein the second duration includes a millisecond-level duration and/or a slot-level duration and/or a symbol-level duration.
26. The repeater according to supplement 24, wherein the second offset includes a millisecond-level offset and/or a slot-level offset and/or a symbol-level offset.
27. The repeater according to supplement 4, wherein the first indication information includes the second indication information.
28. The repeater according to supplement 4, wherein the second indication information includes the first indication information and/or information indicating uplink and downlink directions.
29. The repeater according to supplement 28, wherein the forwarding unit is in an on state on a first time-domain resource indicated by the first information in the first indication information, and/or the forwarding unit is in an off state on a flexible time-domain resource indicated by the information indicating uplink and downlink directions, and/or the forwarding unit is in an off state on a time-domain resource of the first time-domain resource indicated as a flexible time-domain resource by the information indicating uplink and downlink directions.
30. The repeater according to any one of supplements 4 and 27-29, wherein the second indication information includes third information for indicating an on/off state(s), and/or first information for indicating a second time-domain resource to which an on/off state(s) correspond(s).
31. The repeater according to supplement 4, wherein the second indication information includes third information for indicating an on/off state(s) and the first indication information.
32. The repeater according to supplement 31, wherein the second indication information further includes identification information, and/or packet information, and/or priority information.
33. The repeater according to supplement 30, wherein the second time-domain resource is periodic, or semi-persistent, or aperiodic.
34. The repeater according to supplement 30 or 33, wherein the second indication information is carried by second RRC signaling and/or second MAC signaling and/or second PHY signaling.
35. The repeater according to supplement 34, wherein the second RRC signaling includes one or more second configuration information, the second configuration information including all or a part of information in the second indication information.
36. The repeater according to supplement 35, wherein the second MAC signaling and/or the second PHY signaling is/are used to activate and/or deactivate one or more second configurations in the multiple second configuration information.
37. The repeater according to supplement 34, the second MAC signaling includes one or more second configuration information, the second configuration information including all or a part of information in the second indication information.
38. The repeater according to supplement 37, wherein the second PHY signaling is used to activate and/or deactivate one or more second configurations in the multiple second configuration information.
39. The repeater according to supplement 34 or 37 or 38, wherein the second MAC signaling and/or the second PHY signaling further include(s) identification information for indicating one or more second configurations in the multiple second configuration information and/or a part of information in the second indication information.
40. The repeater according to any one of supplements 35-39, wherein the second configuration information includes all or a part of information in the first information indicating the second time-domain resource, and the second time-domain resource is periodic or semi-persistent.
41. The repeater according to supplement 40, wherein the first information includes information indicating second time-domain resources in a period and/or period information.
42. The repeater according to supplement 40 or 41, wherein the second MAC signaling and/or the second PHY signaling include(s) a part of the information in the first information.
43. The repeater according to supplement 40, wherein the part of information in the first information included in the second configuration information includes period information, and the part of information in the first information included in the second MAC signaling and/or the second PHY signaling includes information for indicating second time-domain resources in a period.
44. The repeater according to supplement 41, the information for indicating second time-domain resources in a period includes information of at least one third duration and/or information of at least one third offset.
45. The repeater according to supplement 44, wherein the third duration includes a millisecond-level duration and/or a slot-level duration and/or a symbol-level duration.
46. The repeater according to supplement 44, wherein the third offset includes a millisecond-level offset and/or a slot-level offset and/or a symbol-level offset.
47. The repeater according to supplement 31, when second time-domain resources corresponding to on/off states indicated by different second indication information overlap, the repeater determines that the forwarding unit on the overlapped second time-domain resources is in an on or off state according to the identification information and/or the priority information and/or the packet information.
48. The repeater according to supplement 34 or 42, wherein the second PHY signaling includes one or more second information fields, at least one second information field being used to indicate the second time-domain resource.
49. The repeater according to supplement 48, wherein the second information field includes a time-domain resource allocation information field.
50. The repeater according to supplement 49, wherein TDRA tables corresponding to different time-domain resource allocation information fields are identical or different.
51. The repeater according to supplement 48, wherein the one or more second information fields is/are used to indicate information of at least one fourth duration and/or information of at least one fourth offset.
52. The repeater according to supplement 51, wherein the fourth duration includes a millisecond-level duration and/or a slot-level duration and/or a symbol-level duration.
53. The repeater according to supplement 51, wherein the fourth offset includes a millisecond-level offset and/or a slot-level offset and/or a symbol-level offset.
54. The repeater according to supplement 4, wherein the third indication information includes backhaul link beam indication information, and/or identification information, and/or packet information, and/or priority information, and/or first information for indicating a third time-domain resource to which a backhaul link beam corresponds.
55. The repeater according to supplement 54, wherein the third time-domain resource is periodic, or semi-persistent, or aperiodic.
56. The repeater according to supplement 54 or 55, wherein the third indication information is carried by third RRC signaling and/or third MAC signaling and/or third PHY signaling.
57. The repeater according to supplement 54, wherein the first information includes information indicating third time-domain resources in a period and/or period information.
58. The repeater according to supplement 57, wherein the information for indicating third time-domain resources in a period includes information of at least one fifth duration and/or fifth offset.
59. The repeater according to supplement 54, wherein the first information includes information of at least one sixth duration and/or sixth offset.
60. The repeater according to supplement 58 or 59, wherein the fifth duration and/or the sixth duration include(s) a millisecond-level duration and/or a slot-level duration and/or a symbol-level duration.
61. The repeater according to supplement 58 or 59, wherein the fifth offset and/or the sixth offset include(s) a millisecond-level offset and/or a slot-level offset and/or a symbol-level offset.
62. The repeater according to any one of supplement 14, 24, 44, 51, 58 and 59, wherein a first subcarrier spacing and/or a second subcarrier spacing is/are used to determine the first time-domain resource, a third subcarrier spacing and/or a fourth subcarrier spacing is/are used to determine the second time-domain resource, and the fifth subcarrier spacing and/or the sixth subcarrier spacing is/are used to determine the third time-domain resource.
63. The repeater according to supplement 3 or 62, wherein the second information includes one or more subcarrier spacing indication information, the one or more subcarrier spacing indication information being used to indicate the first subcarrier spacing and/or the second subcarrier spacing and/or a third subcarrier spacing and/or a fourth subcarrier spacing and/or a fifth subcarrier spacing and/or a sixth subcarrier spacing.
64. The repeater according to supplement 63, wherein one subcarrier spacing indication information corresponds to one beam or multiple beams, or corresponds to one first indication information (access link beam indication information) or multiple first indication information (access link beam indication information), or corresponds to an on/off state(s), or corresponds to one second indication information or multiple second indication information, or corresponds to one third indication information or multiple third indication information.
65. The repeater according to supplement 7 or 34 or 56, wherein the second information is included in the first RRC signaling and/or the first MAC signaling and/or the first PHY signaling, or is included in the second RRC signaling and/or the second MAC signaling and/or the second PHY signaling, or is included in the third RRC signaling and/or the third MAC signaling and/or the third PHY signaling, or is included in the fourth RRC signaling and/or the fourth MAC signaling and/or the fourth PHY signaling.
66. The repeater according to supplement 3 or 62, wherein the first subcarrier spacing and/or the second subcarrier spacing and/or the third subcarrier spacing and/or the fourth subcarrier spacing and/or the fifth subcarrier spacing and/or the sixth subcarrier spacing is/are determined according to a communication standard definition rule, including that the first subcarrier spacing and/or the second subcarrier spacing and/or the third subcarrier spacing and/or the fourth subcarrier spacing and/or the fifth subcarrier spacing and/or the sixth subcarrier spacing is fixed, or is a reference subcarrier spacing of TDD configuration, or a subcarrier spacing of uplink/downlink activated BWP(s) of the repeater, or a subcarrier spacing of a PDSCH or PDCCH carrying all or a part of the information in the indication information, or a subcarrier spacing of a PUCCH/PUCCHs carrying HARQ feedback of a PDSCH or PDCCH carrying all or a part of the information in the indication information, or a maximum or minimum value of a subcarrier spacing of uplink/downlink configured BWP(s) of the repeater, or a maximum or minimum value of a subcarrier spacing of an SSB, or a maximum or minimum value of a subcarrier spacing of a PRACH, or a maximum or minimum value of a subcarrier spacing of a downlink and/or uplink carrier(s), or a maximum or minimum value of at least two of the above subcarrier spacings.
67. The repeater according to supplement 62, wherein the first subcarrier spacing and/or the second subcarrier spacing and/or the third subcarrier spacing and/or the fourth subcarrier spacing and/or the fifth subcarrier spacing and/or the sixth subcarrier spacing are identical or different.
68. A network device, characterized in that the network device includes:
   a transmitting unit configured to transmit indication information for controlling a forwarding unit of a repeater to a mobile termination of the repeater, the indication information including first information for indicating time-domain resources, the time-domain resources being related to subcarrier spacings.

## Claims

1. A repeater, **characterized in that** the repeater includes:
a receiving unit configured to receive indication information for controlling a forwarding unit of the repeater, the indication information including first information for indicating time-domain resources, the time-domain resources being related to subcarrier spacings.

2. The repeater according to claim 1, wherein the repeater further includes:
a determining unit configured to determine the time-domain resources according to the subcarrier spacings.

3. The repeater according to claim 1, wherein the subcarrier spacings are predefined, or are indicated by second information transmitted by a network device.

4. The repeater according to claim 1, wherein the indication information includes first indication information for controlling an access link beam of the repeater, or second indication information for controlling on/off state of the forwarding unit of the repeater, or third indication information for controlling a backhaul link beam of the repeater.

5. The repeater according to claim 4, wherein the first indication information includes access link beam indication information, and/or identification information, and/or packet information, and/or priority information, and/or first information for indicating a first time-domain resource to which an access link beam corresponds.

6. The repeater according to claim 4, wherein the second indication information includes third information for indicating an on/off state(s), and/or first information for indicating a second time-domain resource to which an on/off state(s) correspond(s), and/or identification information, and/or packet information, and/or priority information.

7. The repeater according to claim 4, wherein the third indication information includes backhaul link beam indication information, and/or identification information, and/or packet information, and/or priority information, and/or first information for indicating a third time-domain resource to which a backhaul link beam corresponds.

8. The repeater according to claim 5 or 6 or 7, wherein a first subcarrier spacing and/or a second subcarrier spacing is/are used to determine the first time-domain resource, a third subcarrier spacing and/or a fourth subcarrier spacing is/are used to determine the second time-domain resource, and the fifth subcarrier spacing and/or the sixth subcarrier spacing is/are used to determine the third time-domain resource.

9. The repeater according to claim 3, wherein the second information includes one or more subcarrier spacing indication information, the one or more subcarrier spacing indication information being used to indicate the first subcarrier spacing and/or the second subcarrier spacing and/or a third subcarrier spacing and/or a fourth subcarrier spacing and/or a fifth subcarrier spacing and/or a sixth subcarrier spacing.

10. The repeater according to claim 9, wherein one subcarrier spacing indication information corresponds to one beam or multiple beams, or corresponds to one first indication information (access link beam indication information) or multiple first indication information (access link beam indication information), or corresponds to an on/off state(s), or corresponds to one second indication information or multiple second indication information, or corresponds to one third indication information or multiple third indication information.

11. The repeater according to claim 5, wherein the first indication information is carried by first RRC signaling and/or first MAC signaling and/or first PHY signaling.

12. The repeater according to claim 6, wherein the second indication information is carried by second RRC signaling and/or second MAC signaling and/or second PHY signaling.

13. The repeater according to claim 7, wherein the third indication information is carried by third RRC signaling and/or third MAC signaling and/or third PHY signaling.

14. The repeater according to claim 11 or 12 or 13, second information used for indicating a subcarrier spacing is included in the first RRC signaling and/or the first MAC signaling and/or the first PHY signaling, or is included in the second RRC signaling and/or the second MAC signaling and/or the second PHY signaling, or is included in the third RRC signaling and/or the third MAC signaling and/or the third PHY signaling, or is included in the fourth RRC signaling and/or the fourth MAC signaling and/or the fourth PHY signaling.

15. The repeater according to claim 8, wherein the first subcarrier spacing and/or the second subcarrier spacing and/or the third subcarrier spacing and/or the fourth subcarrier spacing and/or the fifth subcarrier spacing and/or the sixth subcarrier spacing is/are determined according to a communication standard definition rule, including that the first subcarrier spacing and/or the second subcarrier spacing and/or the third subcarrier spacing and/or the fourth subcarrier spacing and/or the fifth subcarrier spacing and/or the sixth subcarrier spacing is fixed, or is a reference subcarrier spacing of TDD configuration, or a subcarrier spacing of uplink/downlink activated BWP(s) of the repeater, or a subcarrier spacing of a PDSCH or PDCCH carrying all or a part of the information in the indication information, or a subcarrier spacing of a PUCCH/PUCCHs carrying HARQ feedback of a PDSCH or PDCCH carrying all or a part of the information in the indication information, or a maximum or minimum value of a subcarrier spacing of uplink/downlink configured BWP(s) of the repeater, or a maximum or minimum value of a subcarrier spacing of an SSB, or a maximum or minimum value of a subcarrier spacing of a PRACH, or a maximum or minimum value of a subcarrier spacing of a downlink and/or uplink carrier(s), or a maximum or minimum value of at least two of the above subcarrier spacings.

16. The repeater according to claim 8, wherein the first subcarrier spacing and/or the second subcarrier spacing and/or the third subcarrier spacing and/or the fourth subcarrier spacing and/or the fifth subcarrier spacing and/or the sixth subcarrier spacing are identical or different.

17. The repeater according to claim 1, wherein the first information includes information for indicating the first time-domain resources in a period and/or period information, wherein the information for indicating the first time-domain resources in a period includes information of at least one duration and/or information of at least one offset.

18. The repeater according to claim 17, wherein, the subcarrier spacing being used to determine the duration and the offset.

19. A network device, **characterized in that** the network device includes:
a transmitting unit configured to transmit indication information for controlling a forwarding unit of a repeater to a mobile termination of the repeater, the indication information including first information for indicating time-domain resources, the time-domain resources being related to subcarrier spacings.

20. A communication system, comprises a repeater according to claim 1 and/or a network device according to claim 19.
